(19) **Europäisches Patentamt / European Patent Office / Office européen des brevets**

(11) **EP 2 330 817 B1**

(12) **EUROPEAN PATENT SPECIFICATION**

(45) Date of publication and mention of the grant of the patent:
**31.08.2016 Bulletin 2016/35**

(51) Int Cl.:
*G06T 5/00* (2006.01)  *G06T 7/20* (2006.01)
*H04N 19/537* (2014.01)  *H04N 19/577* (2014.01)
*H04N 19/513* (2014.01)  *H04N 7/01* (2006.01)

(21) Application number: **09811368.1**

(22) Date of filing: **17.07.2009**

(86) International application number:
**PCT/JP2009/062949**

(87) International publication number:
**WO 2010/026839 (11.03.2010 Gazette 2010/10)**

(54) **VIDEO SIGNAL CONVERTING SYSTEM**

VIDEOSIGNALUMWANDLUNGSSYSTEM

SYSTÈME DE CONVERSION DE SIGNAL VIDÉO

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.09.2008 JP 2008227628**
 **04.09.2008 JP 2008227629**
 **04.09.2008 JP 2008227630**

(43) Date of publication of application:
**08.06.2011 Bulletin 2011/23**

(73) Proprietor: **Japan Science and Technology Agency**
 **Saitama 332-0012 (JP)**

(72) Inventors:
 • **TORAICHI, Kazuo**
  **Tsukuba City**
  **Ibaraki 305-0031 (JP)**
 • **WU, Dean**
  **Tsukuba City**
  **Ibaraki 305-0044 (JP)**
 • **GAMBA, Jonah**
  **Ibaraki 305-0836 (JP)**
 • **OMIYA, Yasuhiro**
  **Tsukuba City**
  **Ibaraki 300-3261 (JP)**

(74) Representative: **Müller Hoffmann & Partner Patentanwälte mbB**
 **St.-Martin-Strasse 58**
 **81541 München (DE)**

(56) References cited:
**EP-A1- 1 774 794   WO-A1-01/45036**
**JP-A- 4 246 992   JP-A- 11 068 515**
**JP-A- 11 069 170   JP-A- 2000 004 363**
**JP-A- 2002 199 400   JP-A- 2008 099 281**
**JP-B2- 3 732 978   US-B1- 6 466 624**

• **JOSE A GUERRERO-COLON ET AL: "Image Restoration Using Space-Variant Gaussian Scale Mixtures in Overcomplete Pyramids", IEEE TRANSACTIONS ON IMAGE PROCESSING, IEEE SERVICE CENTER, PISCATAWAY, NJ, US, vol. 17, no. 1, 1 January 2008 (2008-01-01), pages 27-41, XP011197524, ISSN: 1057-7149, DOI: 10.1109/TIP.2007.911473**
• **KAREN EGIAZARIAN ET AL: "Compressed Sensing Image Reconstruction Via Recursive Spatially Adaptive Filtering", IMAGE PROCESSING, 2007. ICIP 2007. IEEE INTERNATIONAL CONFERENCE ON, IEEE, PI, 1 September 2007 (2007-09-01), pages I-549, XP031157800, ISBN: 978-1-4244-1436-9**
• **STILLER C ET AL: "ESTIMATING MOTION IN IMAGE SEQUENCES - A TUTORIAL ON MODELING AND COMPUTATION OF 2D MOTION", IEEE SIGNAL PROCESSING MAGAZINE, IEEE SERVICE CENTER, PISCATAWAY, NJ, US, 1 July 1999 (1999-07-01), pages 70-91, XP011089844, ISSN: 1053-5888**

- SULLIVAN G J ET AL: "Motion compensation for video compression using control grid interpolation", SPEECH PROCESSING 1. TORONTO, MAY 14 - 17, 1991; [INTERNATIONAL CONFERENCE ON ACOUSTICS, SPEECH & SIGNAL PROCESSING. ICASSP], NEW YORK, IEEE, US, vol. CONF. 16, 14 April 1991 (1991-04-14), pages 2713-2716, XP010043566, DOI: 10.1109/ICASSP.1991.150962 ISBN: 978-0-7803-0003-3
- SEUNG-JONG CHOI ET AL: "Motion-Compensated 3-D Subband Coding of Video", IEEE TRANSACTIONS ON IMAGE PROCESSING, IEEE SERVICE CENTER, PISCATAWAY, NJ, US, vol. 8, no. 2, 1 February 1999 (1999-02-01), XP011026270, ISSN: 1057-7149
- SALEMBIER P ET AL: "REGION-BASED VIDEO CODING USING MATHEMATICAL MORPHOLOGY", PROCEEDINGS OF THE IEEE, IEEE. NEW YORK, US, vol. 83, no. 6, 1 June 1995 (1995-06-01), pages 843-857, XP000518739, ISSN: 0018-9219, DOI: 10.1109/5.387088
- CAFFORIO C ET AL: "MOTION COMPENSATED IMAGE INTERPOLATION", IEEE TRANSACTIONS ON COMMUNICATIONS, IEEE SERVICE CENTER, PISCATAWAY, NJ. USA, vol. 38, no. 2, 1 February 1990 (1990-02-01), pages 215-222, XP000113142, ISSN: 0090-6778, DOI: 10.1109/26.47856
- LEE S-H ET AL: "WEIGHTED-ADAPTIVE MOTION-COMPENSATED FRAME RATE UP-CONVERSION", IEEE TRANSACTIONS ON CONSUMER ELECTRONICS, IEEE SERVICE CENTER, NEW YORK, NY, US, vol. 49, no. 3, 1 August 2003 (2003-08-01) , pages 485-492, XP001172087, ISSN: 0098-3063, DOI: 10.1109/TCE.2003.1233759
- YEN-KUANG CHEN ET AL: "Frame-rate up-conversion using transmitted true motion vectors", MULTIMEDIA SIGNAL PROCESSING, 1998 IEEE SECOND WORKSHOP ON REDONDO BEACH, CA, USA 7-9 DEC. 1998, PISCATAWAY, NJ, USA,IEEE, US, 7 December 1998 (1998-12-07), pages 622-627, XP010318331, DOI: 10.1109/MMSP.1998.739050 ISBN: 978-0-7803-4919-3
- KAZUO TORAICHI ET AL.: 'Fluency Kaiseki no Gazo Shori eno Oyo -Atarashii Digital Gazo Henkan Gijutsu' JAPAN PRINTER vol. 84, no. 6, 15 June 2001, pages 23 - 28, XP008144502
- KOICHI MORI ET AL.: 'Gazo Rinkaku no Kansu Kinji o Mochiita Ko Seido Bunsho System' THE JOURNAL OF THE INSTITUTE OF IMAGE ELECTRONICS ENGINEERS OF JAPAN vol. 28, no. 5, 25 October 1999, pages 627 - 635, XP008144497

**Description**

Technical Field

This invention relates to a picture signal conversion system that converts a moving picture into the picture information higher in resolution.

Background Art

In these days, marked progress has been made in the techniques of digital signals in the multi-media industry or IT (Information Technology) industry, especially the techniques of communication, broadcasting, recording mediums, such as CD (Compact Disc), DVD (Digital Versatile Disc), medical or printing applications handling moving pictures, still pictures or voice. Signal encoding for compression, aimed to decrease the volume of the information, represents a crucial part of the digital signal techniques handling the moving pictures, still images and voice. The encoding for compression is essentially based on the Shannon's sampling theorem as its supporting signal theory and on a more recent theory known as wavelet transform. In music CD, linear PCM (Pulse Code Modulation), not accompanied by compression, is also in use. However, the basic signal theory is again the Shannon's sampling theorem.

Heretofore, MPEG has been known as a compression technique for moving pictures or animation pictures. With the coming into use of the MPEG-2 system in digital broadcast or DVD, as well as the MPEG-4 system in mobile communication or so-called Internet streaming of the third generation mobile phone, the digital compression technique for picture signals has recently become more familiar. The background is the increasing capacity of storage media, increasing speed of the networks, improved processor performance and the increased size of system LSIs as well as low cost. The environment that supports the systems for application in pictures in need of the digital compression is recently more and more in order.

The MPEG2 (ISO (International Organization for Standardization)/ IEC (International Electrotechnical Commission) 13818-2) is a system defined as a general-purpose picture encoding system. It is a system defined to cope with both the interlaced scanning and progressive scanning and to cope with both the standard resolution pictures and high resolution pictures. This MPEG2 is now widely used in a broad range of applications including the applications for professional and consumer use. In the MPEG2, standard resolution picture data of 720×480 pixels of the interlaced scanning system may be compressed to pixels of 4 to 8 Mbps bit rate, whilst high resolution picture data of 1920×1080 pixels of the interlaced scanning system may be compressed to pixels of 18 to 22 Mbps bit rate. It is thus possible to assure a high compression rate with a high picture quality.

In encoding moving pictures in general, the information volume is compressed by reducing the redundancy along the time axis and along the spatial axis. In inter-frame predictive coding, motion detection and creation of predictive pictures are made on the block basis as reference is made to forward and backward pictures. It is the difference between the picture as an object of encoding and a predictive picture obtained that is encoded. It should be noted that a picture is a term that denotes a single picture. Thus, it means a frame in the progressive encoding and a frame or a field in the interlaced scanning. The interlaced picture denotes a picture in which a frame is made up of two fields taken at different time points. In the processing of encoding or decoding the interlaced picture, a sole frame may be processed as a frame per se or as two fields. The frame may also be processed as being of a frame structure from one block in the frame to another, or being of a two-field structure.

Among the techniques of enhancing the quality of a television picture, there is a technique of increasing the number of scanning lines as well as the number of horizontal pixels. For example, video signals of the current NTSC system use 2:1 interlaced scanning, so that the vertical resolution is approximately 300 lines. The number of scanning lines of a display device used in a routine television receiver is 525. It is noted that the resolution is deteriorated by the interlaced scanning. To cope with this problem, there is known a technique of increasing the number of pixels in the vertical direction by field interpolation using a field buffer to convert the scanning into non-interlaced scanning to enhance the resolution in the vertical direction.

In certain display devices used for a high quality television receiver, the number of vertical pixels is set to twice as many as that for a routine television receiver. According to this technique, the horizontal resolution may be increased by doubling the number of pixels in the direction of the scanning lines, thereby enhancing the horizontal resolution.

There are currently known methods of repeating or decimating the same pixels at a preset interval to enlarge or reduce a picture by a simplified processing. Viz., such techniques for reducing picture distortion ascribable to errors at a reduced volume of mathematical operations, or such techniques for encoding picture data more efficiently, have so far been proposed. See for example the Japanese Laid-Open Patent Publications Hei11-353472, 2000-308021 and 2008-4984.

There is also proposed a technique in which accurate camera moving components of sub-pixels between pixels are detected at the same time as moving pixels are input to decide on larger numbers of the sub-pixels and combining the pixels into a picture by e.g., an infinite impulse response (IIR) filter. By so doing, the resolution may be improved to achieve high picture quality by picture enhancement by electronic zooming. See for example the Japanese Laid-Open Patent Publication Hei9-163216.

Moreover, to adaptively remove non-clear portions due to handshake, defocusing or smoke in video signal capturing, the processing by frame-to-frame differential information or the processing by a Wiener filter has so far been used.

For example, to remove the imaging noise in an image picked up by a camera capable of performing a rotational movement or a zooming movement, by a remote operation, a feedback coefficient representing the amount of feedback of a picture of a directly previous frame to a picture of the current frame is found. The picture of such previous frame is superposed on the frame of the current frame with a ratio corresponding to the feedback amount. It is then calculated where in a picture image of the directly previous frame a picture signal of interest in the current frame was located. These calculations are to be based on the rotation information regarding the rotation of a video camera system in question and/or the zooming information for the zooming operation. If the picture portions for the same objects are correctly superimposed together, it is possible to reduce after-image feeling based on processing for removing image capturing noise otherwise caused by rotational and/or zooming movements. See for example, the Japanese Laid-Open Patent Publication 2007-134886.

There has also been proposed a picture noise removing circuit in which the presence or non-presence of the noise in a plurality of picture signal for the same object is detected to output at least one noise-free picture signal. See for example the Japanese Laid-Open Patent Publication Hei8-84274.

Disclosure of the Invention

Problem to be solved by the Invention

A conventional A-D conversion/ D-A conversion system, which is based on the Shannon's sampling theorem, handles a signal band-width-limited by the Nyquist frequency. In this case, to convert a signal, turned into discrete signals by sampling, back into a time-continuous signal, a function that recreates a signal within the limited frequency range (regular function) is used in D-A conversion.

One of the present inventors has found that various properties of the picture signal or the voice signal, such as a picture (moving picture), letters, figures or a picture of natural scenery, may be classified using a fluency function. According to the corresponding theory, the above mentioned regular function, which is based on the Shannon's sampling theorem, is among the fluency functions, and simply fits with a sole signal property out of a variety of signal properties. Thus, if the large variety of the signals are treated with only the regular function which is based upon the Shannon's sampling theorem, there is a fear that restrictions are imposed on the quality of the playback signals obtained after D/A conversion.

The theory of wavelet transform represents a signal using a mother wavelet that decomposes an object in terms of the resolution. However, since a mother wavelet optimum to a signal of interest is not necessarily available, there is again a fear that restrictions are imposed on the quality of the playback signals obtained on D/A conversion.

The fluency function is a function classified by a parameter m, m being a positive integer of from 1 to $\infty$. It is noted that m denotes that the function is continuously differentiable only by (m-2) times. Since the above regular function is differentiable any number of times, m = $\infty$. Moreover, the fluency function is constituted by a degree (m-1) function. In particular, the fluency DA function, out of a variety of the fluency functions, has its value determined by a k'th sampling point k$\tau$ of interest, where $\tau$ is the sample interval. At the other sampling points, the function becomes zero (0).

The total of the properties of a signal may be classified by a fluency function having a parameter m, which parameter m determines the classes. Hence, the fluency information theory, making use of the fluency function, comprehends the Shannon's sampling theorem or the theory of wavelet transform each of which simply represent a part of the signal properties. Viz., the fluency information theory may be defined as a theory system representing a signal in its entirety. By using such function, a high quality playback signal, not bandwidth-limited by the Shannon's sampling theorem, may be expected to be obtained on D-A conversion for the entire signal.

Meanwhile, in the conventional processing by frame-to-frame differential information or by a Wiener filter, it is not possible to render a picture clearer or to emphasize an edge.

On the other hand, in contents communication or picture retrieval, it is required to display a clear picture which performs a smooth movement.

However, a digital picture suffers a problem that step-shaped irregularities, called jaggies, are produced at an edge of a partial picture on picture enlarging to a higher multiplication factor, thereby deteriorating the picture quality. For example, in MPEG, known as a compression technique for moving pictures or animation pictures, such jaggies are produced at a picture contour to deteriorate the sharpness or to deteriorate color reproducing performance in the boundary region between dense and pale color portions.

As regards the frame-to-frame information, simply the information on interpolation is exploited, however, no high definition information is produced.

On the other hand, frame rate conversion has been recognized to be necessary to meet the demand for converting the overseas video information or motion pictures into the video information or for interpolating the frame-to-frame information in animation picture creation. For example, a need is felt for converting a picture of the motion picture signal system at a rate of 24 frames per second into a picture at a rate of 30 frames per second or for converting the picture rate of a television picture to a higher frame rate for enhancing the definition or into pictures of a frame rate for mobile phones.

However, such a method that generates a new frame by frame decimation or by interpolation of forward and backward picture frames has so far been a mainstream method. There has thus been raised a problem that the picture motion is not smooth or the picture becomes distorted.

In view of the above described problems of the related technology, it is desirable to provide a picture signal conversion system according to which the moving picture information such as picture or animation may be processed in a unified manner to enable generation of a high quality moving picture.

It is desirable to provide a picture signal conversion system having a filtering function of removing noise from the video signal to yield a clear picture with emphasized edges.

It is desirable to provide a picture signal conversion system that allows a clear picture performing a smooth motion to be displayed and that has the moving picture processing function effective for contents communication or for picture retrieval.

Other advantages of the present invention will become more apparent from the following description of preferred embodiments of the invention.

In US 6 466 624 B1, an advanced decoder is disclosed, providing enhancement processing in accordance with information previously known only to the decoder and/or encoder. Preferably, advanced digital video image enhancement utilizing bitstream information is provided in an integrated manner with advanced decoding and, more preferably, provides for MPEG decoding and image enhancement. In addition to advanced edge detection and other advanced processing tools, the invention further enables the use of decoder based coding-type operations, such as reverse superresolution, as well as advanced superresolution, and 3-D display processing techniques in conjunction with video processing. The invention is therefore capable of reducing system complexity and/or bandwidth, requirements, and improving system robustness and/or the ultimate quality of the enhanced video signal, among other advantages.

In KAREN EGIAZARIAN ET AL: "Compressed Sensing Image Reconstruction Via Recursive Spatially Adaptive Filtering", IEEE INTERNATIONAL CONFERENCE ON IMAGE PROCESSING, IEEE, PI, 1 September 2007 (2007-09-01), pages I-549 to I-552, an approach to image reconstruction from highly incomplete data, related to the fields of "compressed sension" and "compressive sampling" and based on a specific recursive filtering procedure is disclosed. The available data are assumed to be a small collection of spectral coefficients of an arbitrary linear transform. At every iteration the algorithm is excited by injection of random noise in the unobserved portion of the spectrum. A spatially adaptive image denoising filter, working in the image domain, is exploited to attenuate the noise and and reveal new features and details of the incomplete and degraded observations (special type of Robbins-Monro stochasticapproximation procedure).

SULLIVAN G J ET AL: "Motion compensation for video compression using control grid interpolation", SPEECH PROCESSING 1. TORONTO, MAY 14 - 17, 1991; [INTERNATIONAL CONFERENCE ON ACOUSTICS, SPEECH & SIGNAL PROCESSING. ICASSP], NEW YORK, IEEE, US, vol. CONF. 16, 14 April 1991 (1991-04-14), pages 2713-2716, discloses a new class of motion compensation methods that are based on control grid interpolation (CGI) for use in video compression. The predominant motion compensation method, block matching, is shown to be a special case of CGI. A new CGI method is presented that produces a smooth motion vector field, preserving continuity and connectivity in the prediction image. When contrasted with block matching, the algorithm eliminates blocking artifacts while using the same or less side information for approximately the same mean square error. Search algorithms and coding methods developed previously for block matching can be used with this new technique.

In SALEMBIER P ET AL: "REGION-BASED VIDEO CODING USING MATHEMATICAL MORPHOLOGY", PROCEEDINGS OF THE IEEE, IEEE. NEW YORK, US, vol. 83, no. 6, 1 June 1995 (1995-06-01), pages 843-857, a region-based coding algorithm for video sequences is disclosed. The coding approach involves a time-recursive segmentation relying on the pixels homogeneity, a region-based motion estimation, and motion compensated contour and texture coding. This algorithm is mainly devoted to very low bit rate video coding applications. One of the important features of the approach is that no assumption is made about the sequence content. Moreover the algorithm structure leads to a scalable coding process giving various levels of quality and bit rates. The coding as well as the segmentation are controlled to regulate the bit stream.

CAFFORIO C ET AL: "MOTION COMPENSATED IMAGE INTERPOLATION", IEEE TRANSACTIONS ON COMMUNICATIONS, IEEE SERVICE CENTER, PISCATAWAY, NJ. USA, vol. 38, no. 2, 1 February 1990 (1990-02-01), pages 215-222, discloses field skipping as a variable technique for reducing drastically the bit rate necessary to transmit a television signal. It is discussed that all fields have to be reconstructed at the receiver end, but nearest-neighbor or linear interpolations give poor performances when significant scene activity is present. Therefore, some motion compensation scheme is mandatory is considered. Past experience on the pelrecursive algorithm is briefly summarized and improvements that lead to an estimated motion field that is accurate enough to the basic algorithm are proposed. Multiple recursions and appropriate selection rules are proposed to counteract streaking effects of the recursive algorithm when it crosses image boundaries. The estimation of a forward and a backward motion field is used to identify image areas where occlusion effects are present.

In YEN-KUANG CHEN ET AL: "Frame-rate up-conversion using transmitted true motion vectors", MULTIMEDIA SIGNAL PROCESSING, 1998 IEEE SECOND WORKSHOP ON REDONDO BEACH, CA, USA 7-9 DEC. 1998, PISCATAWAY, NJ, USA,IEEE, US, 7 December 1998 (1998-12-07), pages 622-627, a video frame-rate up-conversion scheme is disclosed that uses transmitted true motion vectors for motion-compensated interpolation. In the proposed scheme, the true motion field is derived by the encoder and transmitted by normal means (e.g., MPEG or H.263 encoding). Then, it is recovered by the decoder and is used not only for motion compensated predictions but also to reconstruct missing data. It is shown that the use of neighborhood-relaxation motion estimation provides a method of constructing high quality image sequences in a practical manner.

A picture signal conversion system according to an embodiment of the present invention comprises a pre-processor having a reverse filter operating for performing pre-processing of removing blurring or noise contained in an input picture signal. The pre-processor includes an input picture observation model that adds noise n(x,y) to an output of a blurring function H(x,y) to output an observed model g(x,y), the blurring function inputting a true picture f(x,y) to output a deteriorated picture. The pre-processor recursively optimizes the blurring function H(x,y) so that the input picture signal will be coincident with the observed picture. The reverse filter extracts a true picture signal from the input picture signal. The picture signal conversion system also comprises an encoding processor performing corresponding point estimation, based on a fluency theory, on the true input picture signal freed of noise by the pre-processor. The encoding processor expresses the motion information of a picture in the form of a function and selects a signal space for the true input picture signal. The encoding processor also expresses the picture information for an input picture signal from one selected signal space to another, and states the picture motion information expressed in the form of a function and the picture information of the picture expressed as the function in a preset form such as to encode the picture signal by compression. The picture signal conversion system also comprises a frame rate enhancing processor for enhancing the frame rate of the picture signal encoded for compression by the encoding processor.

In the picture signal conversion system according to the embodiment of the present invention, the encoding processor comprises a corresponding point estimation unit for performing corresponding point estimation on the input picture signal freed of noise by the pre-processor based on the fluency theory. The encoding processor also comprises a first render-into-function processor for expressing the picture movement information in the form of a function based on the result of estimation of the corresponding point information by the corresponding point estimation unit. The encoding processor also comprises a second render-into-function processor for selecting a plurality of signal spaces for the input picture signal and for putting the picture information in the form of a function from one signal space selected to another. The encoding processor further comprises an encoding processor that states the picture movement information expressed in the form of the function by the first render-into-function processor, and the picture information for each signal space expressed as a function by the second render-into-function, in a preset form, such as to encode the input picture signal by compression.

In the picture signal conversion system according to the embodiment of the present invention, the corresponding point estimation unit comprises first partial region extraction means for extracting a partial region of a frame picture, and second partial region extraction means for extracting a partial region of another frame picture similar in shape to the partial region extracted by the first partial region extraction means. The corresponding point estimation unit also comprises approximate-by-function means for selecting the partial regions extracted by the first and second partial region extraction means so that the selected partial regions will have equivalent picture states. The approximate-by-function means expresses the gray levels of the selected partial regions by piece-wise polynomials to output the piece-wise polynomials. The corresponding point estimation unit further comprises correlation value calculation means for calculating correlation values of outputs of the approximate-by-function means, and offset value calculation means for calculating the position offset of the partial regions that will give a maximum value of the correlation calculated by the correlation value calculation means to output the calculated values as the offset values of the corresponding points.

In the picture signal conversion system according to the embodiment of the present invention, the second render-into-function processor includes an automatic region classification processor that selects a plurality of signal spaces, based on the fluency theory, for the picture signal freed of noise by the pre-processing. The second render-into-function processor also includes a render-into-function processing section that renders the picture information into a function from one signal space selected by the automatic region classification processor to another. The render-into-function processing section includes a render-gray-level-into-function processor that, for a region that has been selected by the automatic region classification processor and that is expressible by a polynomial, approximates the picture gray level by approximation with a surface function to put the gray level information into the form of a function. The render-into-function processing section also includes a render-contour-line-into-function processor that, for the region that has been selected by the automatic region classification processor and that is expressible by a polynomial, approximates the picture contour line by approximation with the picture contour line function to render the contour line into the form of a function.

In the picture signal conversion system according to the embodiment of the present invention, the render-gray-level-into-function processor puts the gray level information, for the picture information of the piece-wise curved surface information (m = 3), piece-wise spherical surface information (m = $\infty$) and piece-wise planar information, selected by the automatic region classification processor and expressible by a polynomial (m $\leq$ 2), using a fluency function.

In the picture signal conversion system according to the embodiment of the present invention, the render-contour-line-into-function processor includes an automatic contour classification processor that extracts and classifies the piece-wise line segment, piece-wise degree-two curve and piece-wise arc from the picture information selected by the automatic region classification processor. The render-contour-line-into- function approximates the piece-wise line segment, piece-wise degree-two curve and the piece-wise arc, classified by the render-contour-line-into-function processor, using fluency functions, to put the contour information into the form of a function.

In the picture signal conversion system according to the embodiment of the present invention, the frame rate enhancing unit includes a corresponding point estimation processor that, for each of a plurality of pixels in a reference frame, estimates a corresponding point in each of a plurality of picture frames differing in time. The frame rate enhancing unit also includes a first processor of gray scale value generation that, for each of the corresponding points in each picture frame estimated, finds the gray scale value of each corresponding point from gray scale values indicating the gray level of neighboring pixels. The frame rate enhancing unit also includes a second processor of gray scale value generation that approximates, for each of the pixels in the reference frame, from the gray scale values of the corresponding points in the picture frames estimated, the gray scale value of the locus of the corresponding points by a fluency function, and that finds, from the function, the gray scale values of the corresponding points of a frame for interpolation. The frame rate enhancing unit further includes a third processor of gray scale value generation that generates, from the gray scale value of each corresponding point in the picture frame for interpolation, the gray scale value of neighboring pixels of each corresponding point in the frame for interpolation.

In the picture signal conversion device according to the embodiment of the present invention, the frame rate enhancing processor performs, for the picture signal encoded for compression by the encoding processor, the processing of enhancing the frame rate as well size conversion of enlarging or reducing the picture size to a predetermined size, based on the picture information and the motion information put into the form of the functions.

The present invention also provides a picture signal conversion device, wherein the frame rate enhancing unit includes first function approximation means for inputting the picture information, encoded for compression by the encoding processor, and for approximating the gray scale distribution of a plurality of pixels in reference frames by a function. The frame rate enhancing unit also includes corresponding point estimation means for performing correlation calculations using a function of gray scale distribution in a reference frame, approximated by the first approximate-by-function unit, in a plurality of the reference frames differing in time, and for setting respective positions that yield the maximum value of the correlation as the corresponding point positions in the respective reference frames. The frame rate enhancing unit also includes second function approximation means for putting corresponding point positions in each reference frame as estimated by the corresponding point estimation unit into the form of coordinates in terms of the horizontal and vertical distances from the point of origin of each reference frame, converting changes in the horizontal and vertical positions of the coordinate points in the reference frames different in time into time-series signals, and for approximating the time-series signals of the reference frames by a function. The frame rate enhancing unit further includes a third approximate-by-function unit for setting, for a picture frame of interpolation at an optional time point between the reference frames, a position in the picture frame for interpolation corresponding to the corresponding point positions in the reference frames, as a corresponding point position, using the function approximated by the second approximate-by-function unit. The third approximate-by-function unit finds a gray scale value at the corresponding point position of the picture frame for interpolation by interpolation with gray scale values at the corresponding points of the reference frames. The third approximate-by-function unit causes the first function approximation to fit with the gray scale value of the corresponding point of the picture frame for interpolation to find the gray scale distribution in the neighborhood of the corresponding point to convert the gray scale distribution in the neighborhood of the corresponding point into the gray scale values of the pixel points in the picture frame for interpolation.

In the picture signal conversion system according to the embodiment of the present invention, if $f(x,y)*f(x,y)$ is representatively expressed as Hf, from the result of singular value decomposition (SVD) on an observed picture $g(x,y)$ and a blurring function of a deteriorated model, the reverse filter in the pre-processor possesses filter characteristics obtained on learning of repeatedly performing the processing of setting a system equation as

[Equation 1]

$$g = f + n = Hf + n$$

approximating f as

[Equation 2]

$$H = A \otimes B$$
$$(A \otimes B)f = vec(BFA^T), vec(F) = f$$

(where

[Equation 3]

$$\otimes$$

denotes a Kronecker operator, and

[Equation 4]

$$vec$$

is an operator that extends a matrix in the column direction to generate a column vector);
calculating a new target picture $g_E$ as

[Equation 5]

$$g_E = (\beta C_{EP} + \gamma C_{EN})g$$

(where $\beta$, $\gamma$ are control parameters and $C_{EP}$, $C_{EN}$ are respectively operators for edge saving and edge emphasis) and as

[Equation 6]

$$g_{KPA} = vec(BG_E A^T), vec(G_E) = g_E$$

performing minimizing processing

[Equation 7]

$$\min_{f}\left\{\left\|H_{k}\,f-g_{KPA}\right\|^{2}+\alpha\left\|Cf\right\|^{2}\right\}$$

on the new picture calculated $g_{KPA}$, verifying whether or not the test condition is met; if the test condition is not met, performing minimizing processing:

[Equation 8]

$$\min_{H}\left\{\left\|Hf_{k}-g_{KPA}\right\|^{2}\right\}$$

on the blurring function $H_k$ of the deterioration model, and estimating the blurring function H of the deterioration model as

[Equation 9]

$$G_{SVD}=U\Sigma V^{T},A=U_{A}\,\Sigma_{A}\,V_{A}^{\ T},B=U_{B}\,\Sigma_{B}\,V_{B}^{\ T}$$

until $f_k$ obtained by the minimizing processing on the new picture $g_{KPA}$ meets the test condition.

[Equation 10]

$$H=\left(U_{A}\otimes U_{B}\right)\left(\Sigma_{A}\otimes\Sigma_{B}\right)\left(V_{A}\otimes V_{B}\right)^{T}$$

In the picture signal conversion device according to the embodiment of the present invention, the processing for learning verifies whether or not, on $f_k$ obtained by the minimizing processing on the new picture calculated $g_{KPA}$, the test condition:

[Equation 11]

$$H=\left(U_{A}\otimes U_{B}\right)\left(\Sigma_{A}\otimes\Sigma_{B}\right)\left(V_{A}\otimes V_{B}\right)^{T}$$

where k is the number of times of repetition and ε, c denote threshold values for decision, is met.

Brief Description of the Drawings

Fig.1 is a block diagram showing the configuration of a picture signal conversion system according to the embodiment of the present invention.
Fig.2 is a block diagram showing a system model used for constructing a pre-processor in the picture signal conversion system.
Fig.3 is a block diagram showing a restoration system model used for constructing the preprocessor in the picture signal conversion system.
Fig.4 is a flowchart showing a sequence of each processing of a characteristic of a reverse filter used in the pre-processor.
Fig.5 is a block diagram showing the configuration of a compression encoding processor in the picture signal conversion system.

Fig.6 is a block diagram showing the configuration of a corresponding point estimation unit provided in the compression encoding processor.

Fig.7 is a graph for illustrating the space in which to perform 2m-degree interpolation to which the inter-frame-to-frame correlation function belongs.

Figs.8A to 8D are schematic views showing the manner of determining the motion vector by corresponding point estimation by the corresponding point estimation unit.

Fig.9 is a schematic view for comparing the motion vector as determined by the corresponding point estimation by the corresponding point estimation unit to the motion vector as determined by conventional block matching.

Fig.10 is a schematic view for illustrating the point of origin of a frame picture treated by a motion function processor provided in the compression encoding processor.

Figs.11A to 11C are schematic views showing the motion of pictures of respective frames as motions of X-and Y-coordinates of the respective frames.

Fig. 12 is a graph for illustrating the contents of the processing of estimating the inter-frame position.

Figs.13A and 13B are diagrammatic views showing example configurations of a picture data stream generated by MPEG coding and a picture data stream generated by an encoding processor in the picture signal conversion system.

Fig.14 is a diagrammatic view showing an example bit format of I- and P-pictures in a video data stream generated by the encoding processor.

Fig.15 is a diagrammatic view showing an example bit format of a D-picture in the video data stream generated by the encoding processor.

Figs.16A and 16B are graphs showing transitions of X-and Y-coordinates of corresponding points in the example bit format of the D-picture.

Fig.17 is a graph schematically showing an example of calculating the X-coordinate values of each D-picture in a corresponding region from X-coordinate values of forward and backward pictures.

Fig.18 is a block diagram showing an example formulation of a frame rate conversion device.

Figs. 19A and 19B are schematic views showing the processing for enhancing the frame rate by the frame rate conversion device.

Fig.20 is a flowchart showing the sequence of operations for executing the processing for enhancing the frame rate by the frame rate conversion device.

Figs.21A to 21D are schematic views for illustrating the contents of the processing for enhancing the frame rate carried out by the frame rate conversion device.

Fig.22 is a schematic view for illustrating the non-uniform interpolation in the above mentioned frame rate conversion.

Fig.23 is a graph for illustrating the processing of picture interpolation that determines the value of the position of a pixel newly generated at the time of converting the picture resolution.

Figs.24A and 24B are graphs showing examples of a uniform interpolation function and a non-uniform interpolation function, respectively.

Fig.25 is a schematic view for illustrating the contents of the processing for picture interpolation.

Fig.26 is a block diagram showing an example configuration of the enlarging interpolation processor.

Fig.27 is a block diagram showing an example configuration of an SRAM selector of the enlarging interpolation processor.

Fig.28 is a block diagram showing an example configuration of a picture processing block of the enlarging interpolation processor.

Figs.29A and 29B are schematic views showing two frame pictures entered to a picture processing module in the enlarging interpolation processor.

Fig.30 is a flowchart showing the sequence of operations of enlarging interpolation by the enlarging interpolation processor.

Fig.31 is a block diagram showing an example configuration of the frame rate conversion device having the function of the processing for enlarging interpolation.

Fig.32 is a graph showing a class (m=3) non-uniform fluency interpolation function.

Fig.33 is a set of graphs showing examples of approach of high resolution interpolation.

Fig.34 is a schematic view showing a concrete example of a pixel structure for interpolation.

Figs.35(A), (B1), (C1), (B2), (C2) are schematic views for comparing intermediate frames generated by the above frame rate enhancing processing to intermediate frames generated by the conventional technique, wherein Figs.35(A), (B1), (C1) show an example of conventional ca. 1/2 precision motion estimation and Figs.35(A), (B2), (C2) show an example of non-uniform interpolation.

Best Mode for Carrying out the Invention

Preferred embodiments of the present invention will now be described with reference to the drawings. It should be noted that the present invention is not to be limited to the embodiments as now described and may be altered as appropriate within the range not departing from the scope of the invention.

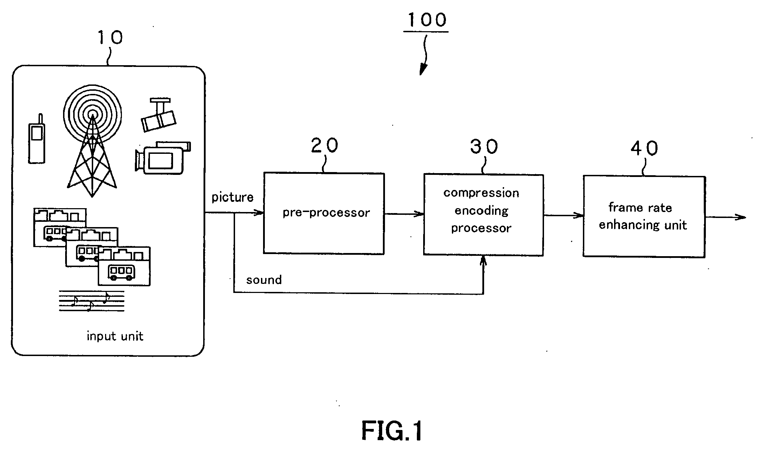

The present invention is applied to a picture signal conversion system 100, configured as shown for example in Fig.1.

The picture signal conversion system 100 includes a pre-processor 20 that removes noise from the picture information entered from a picture input unit 10, such as an image pickup device, a compression encoding processor 30 and a frame rate enhancing unit 40. The compression encoding processor 30 inputs the picture information freed of noise by the pre-processor 20 and encodes the input picture information by way of compression. The frame rate enhancing unit 40 enhances the frame rate of the picture information encoded for compression by the compression encoding processor 30.

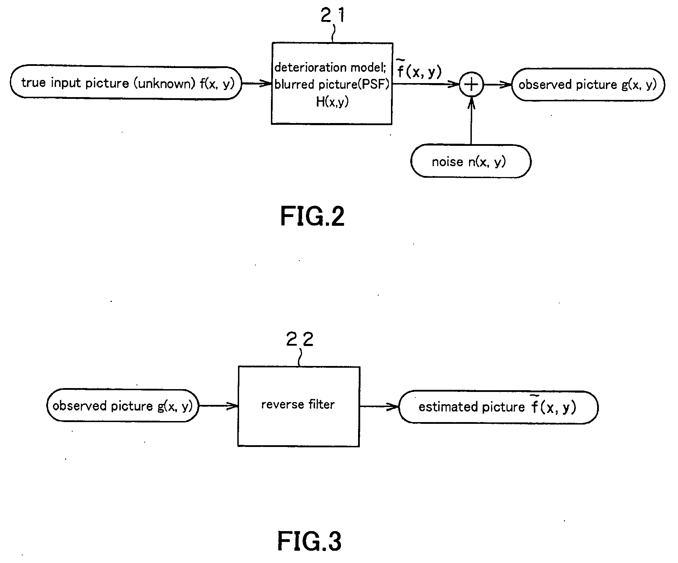

The pre-processor 20 in the present picture signal conversion system 100 removes the noise, such as blurring or hand-shake noise, contained in the input picture information, based on the technique of picture tensor calculations and on the technique of adaptive correction processing by a blurring function, by way of performing filtering processing. By a system model shown in Fig.2, an output of a deterioration model 21 of a blurring function H (x, y) that receives a true input picture f(x, y):

[Equation 12]

$$\hat{f}(x, y)$$

is added to with a noise n (x, y) to produce an observed picture g(x, y). The input picture signal is entered to a restoration system model, shown in Fig.3, to adaptively correct the model into coincidence with the observed picture g(x, y) to obtain an estimated picture:

[Equation 13]

$$\hat{f}(x, y)$$

as a true input picture signal. The pre-processor 20 is, in effect, a reverse filter 22.

The pre-processor 20 removes the noise based on the technique of picture tensor calculations and on the technique of adaptive correction processing of a blurring function, by way of performing the filtering, and evaluates the original picture using the characteristic of a Kronecker product.

The Kronecker product is defined as follows:

If A = [$a_{11}$] is a mn matrix and B = [$b_{11}$] is an st matrix, the Kronecker product

[Equation 14]

$$\left(A \otimes B\right)$$

is the following ms×nt matrix:

[Equation 15]

$$A \otimes B = \left[ a_{ij} B \right]$$

where

[Equation 16]

$$\bigotimes$$

denotes a Kronecker product operator.

The basic properties of the Kronecker product are as follows:

[Equation 17]

$$\left( A \otimes B \right)^{T} = A^{T} \otimes B^{T}$$
$$\left( A \otimes B \right)\left( C \otimes D \right) = \left( AC \right) \otimes \left( BD \right)$$
$$\left( A \otimes B \right)x = vec\left( BXA^{T} \right), vec\left( X \right) = x,$$
$$\left( A \otimes B \right)vec\left( X \right) = vec\left( BXA^{T} \right)$$

where

[Equation 18]

$$vec$$

is an operator that represents the operation of extending the matrix in the column direction to generate a column vector.

In the picture model in the pre-processor 20, it is supposed that there exists an unknown true input picture f(x, y). The observed picture g(x, y), obtained on adding the noise n(x, y) to an output of the deterioration model 21:

[Equation 19]

$$\hat{f}\left( x, y \right)$$

may be represented by the following equation (1):

[Equation 20]

$$g\left( x, y \right) = \bar{f}\left( x, y \right) + n\left( x, y \right)$$

$$(1)$$

where

[equation 21]

$$\hat{f}(x, y)$$

represents a deteriorated picture obtained with the present picture system, and n(x, y) is an added noise. The deteriorated picture:

[equation 22]

$$\hat{f}(x, y)$$

is represented by the following equation (2):
[equation 23]

$$\bar{f}(x, y) = \iint h(x, y; x', y') f(x', y') dx' dy' \tag{2}$$

where h(x, y; x', y') represents an impulse response of the deterioration system.

Since the picture used is of discrete values, a picture model of the input picture f(x, y) may be rewritten as indicated by the following equation (3):
[equation 24]

$$f(x, y) = \sum_{k,l} \hat{f}(k, l) \phi(x - k, y - l)$$
$$\tilde{f}(i, j) = \iint h(i, j; x', y') f(x', y') dx' dy'$$
$$= \iint h(i, j; x', y') \sum_{k,l} \hat{f}(k, l) \phi(x' - k, y' - l) dx' dy'$$
$$= \sum_{k,l} \hat{f}(k, l) \iint h(i, j; x', y') \phi(x' - k, y' - l) dx' dy'$$
$$= \sum_{k,l} \hat{f}(k, l) H_k^{(x)} H_l^{(y)} \tag{3}$$

where $H_{k(x)}$, $H_{l(y)}$, expressed in a matrix form as indicated by the following equation (4), becomes a point image intensity distribution function of the deterioration model (PSF: Point Spread Function) H.
[equation 25]

$$H = \left[ H_k^{(x)} H_l^{(y)} \right] \tag{4}$$

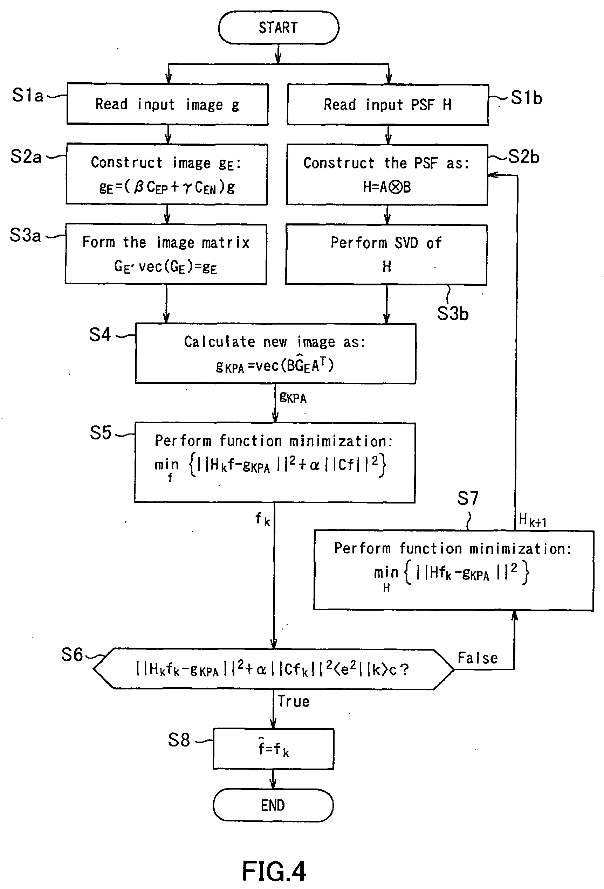

The above described characteristic of the reverse filter 22 is determined by the processing of learning as carried out in accordance with the sequence shown in the flowchart of Fig.4.

Viz., in the processing of learning, the input picture g is initially read-in as the observed image g(x, y) (step S1a) to construct the picture $g_E$ as:

[equation 26]

$$g_E = \left(\beta C_{EP} + \gamma C_{EN}\right)g$$

at step S2a
to carry out the singular value decomposition (SVD) of

[equation27]

$$G_E, vec\left(G_E\right) = g_E$$

in step S3(a).

The point spread function (PSF) H of the deterioration model is then read-in (step S1b) to construct

a deterioration model represented by the Kronecker product:

[equation 28]

$$H = \left(A \otimes B\right)$$

at step S2b to carry out the singular value decomposition (SVD) of the above mentioned deterioration model function H (step S3b).

The system equation g may be rewritten to:

[equation 29]

$$g = \left(A \otimes B\right)f = vec\left(BEA^T\right), vec\left(F\right) = f$$

A new picture $g_{KPA}$ is calculated (step S4) as

[equation 30]

$$g_{KPA} = vec\left(B\hat{G}_E A^T\right)$$

The minimizing processing of

[equation 31]

$$\min_{f}\left\{\left\|H_k\, f - g_{KPA}\right\|^2 + \alpha\left\|Cf\right\|^2\right\}$$

is carried out on the new picture $g_{KPA}$ calculated (step S5). It is then checked whether or not $f_K$ as obtained meets the test condition:

[equation 32]

$$\left\| H_k f_k - g_{KPA} \right\|^2 + \alpha \left\| C f_k \right\|^2 < \varepsilon^2, k > c$$

at step S6. In the above equation, k is a number of times of repetition and g, c represent threshold values for decision (step S6).

If the result of decision in the step S6 is False, viz., $f_K$ obtained in the step S5 has failed to meet the above test condition, the minimizing processing:

[equation 33]

$$\min_H \left\{ \left\| H f_k - g_{KPA} \right\|^2 \right\}$$

is carried out on the above mentioned function H of the deterioration model (step S7) to revert to the above step S3b. On the function $H_{k+1}$, obtained by the above step S6, singular value decomposition (SVD) is carried out. The processing as from the step S3b to the step S7 is reiterated. When the result of decision in the step S6 is True, that is, when $f_K$ obtained in the above step 5 meets the above test condition, $f_K$ obtained in the above step S5 is set to

[equation 34]

$$\hat{f} = f_k$$

(step S8) to terminate the processing of learning for the input picture g.

The characteristic of the reverse filter 22 is determined by carrying out the above mentioned processing of learning on larger numbers of input pictures g.

Viz., h(x, y)*f(x, y) is representatively expressed by Hf, and the system equation is set to

[equation 35]

$$g = f + n = Hf + n$$

and to

[equation 36]

$$H = A \otimes B$$

$$(A \otimes B)f = vec(BEA^T), vec(F) = f$$

to approximate f to derive the targeted new picture $g_E$ as follows:

[equation 37]

$$g_E = E[f]$$

where E stands for estimation. The new picture $g_E$ is constructed for saving or emphasizing edge details of an original picture.

The new picture $g_E$ is obtained as

[equation 38]

$$g_E = (\beta C_{EP} + \gamma C_{EN})g$$

where $C_{EP}$ and $C_{EN}$ denote operators for edge saving and edge emphasis, respectively.

A simple Laplacian kernel $C_{EP} = \nabla_2 F$ and a Gaussian kernel $C_{EN}$ having control parameters $\beta$ and $\gamma$, are selected to set

[equation 39]

$$g_{KPA} = vec(BG_E A^T), vec(G_E) = g_E$$

A problem of minimization is re-constructed as

[equation 40]

$$M(\alpha, f) = \|Hf - g_{KPA}\|^2 + \alpha\|Cf\|^2$$

and, from the following singular value decomposition (SVD):

[Equation 41]

$$G_{SVD} = U\Sigma V^T, A = U_A \Sigma_A V_A^T, B = U_B \Sigma_B V_B^T$$

the function H of the above deterioration model is estimated as

[Equation 42]

$$H = \left(U_A \otimes U_B\right)\left(\Sigma_A \otimes \Sigma_B\right)\left(V_A \otimes V_B\right)^T$$

which is used.

Bt removing the noise, such as blurring or hand-shake noise, contained in the input picture information, based on the technique of picture tensor calculations and on the technique of adaptive correction processing of a blurring function, by the filtering processing, as in the pre-processor 20 in the present picture signal conversion system 100, it is possible not only to remove the noise but to make the picture clear as well as to emphasize the edge.

In the present picture signal conversion system 100, the picture information, processed for noise removal by the pre-processor 20, is encoded for compression by the compression encoding processor 30. In addition, the picture information, encoded for compression, has the frame rate enhanced by the frame rate enhancing unit 40.

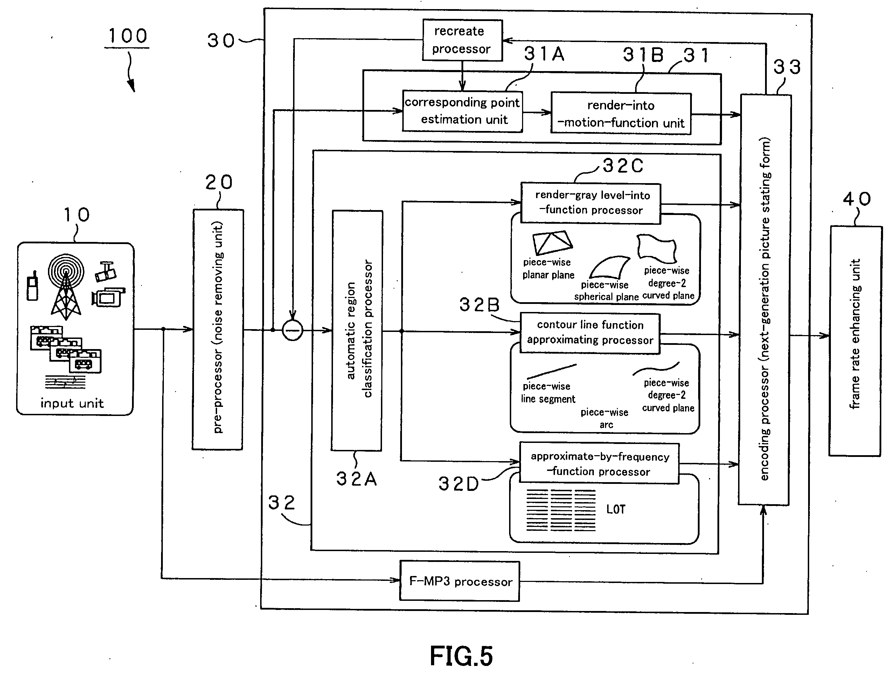

The compression encoding processor 30 in the present picture signal conversion system 100 performs the encoding for compression based on the theory of fluency. Referring to Fig.5, the compression encoding processor includes a first render-into-function processor 31, a second render-into-function processor 32, and an encoding processor 33. The encoding processor 33 states each picture information, put into the form of a function by the first render-into-function processor 31 and the second render-into-function processor 32, in a predetermined form by way of encoding.

The first render-into-function processor 31 includes a corresponding point estimation unit 31A and a render-motion-into-function processor 31B. The corresponding point estimation unit 31A estimates corresponding points between a plurality of frame pictures for the picture information that has already been freed of noise by the pre-processor 20. The render-motion-into-function processor 31B renders the moving portion of the picture information into the form of a function using the picture information of the corresponding points of the respective frame pictures as estimated by the corresponding point estimation unit 31A.

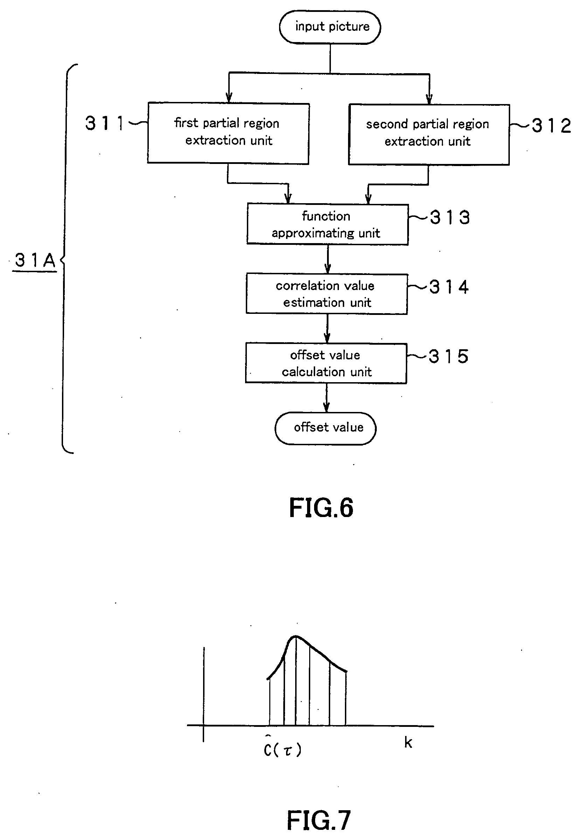

The corresponding point estimation unit 31A is designed and constructed as shown for example in Fig.6.

Viz., the corresponding point estimation unit 31A includes a first partial picture region extraction unit 311 that extracts a partial picture region of a frame picture. The corresponding point estimation unit 31A also includes a second partial picture region extraction unit 312 that extracts a partial picture region of another frame picture that is consecutive to the first stated frame picture. The partial picture region extracted is to be similar in shape to the partial picture region extracted by the first partial picture region extraction unit 311. The corresponding point estimation unit also includes an approximate-by-function unit 313 that selects the partial picture regions, extracted by the first and second partial picture region extraction units 311, 312, so that the two partial picture regions extracted will be in the same picture state. The approximate-by-function unit 313 expresses the gray scale values of the so selected partial picture regions in the form of a function by a piece-wise polynomial in accordance with the fluency function to output the resulting functions. The corresponding point estimation unit also includes a correlation value calculation unit 314 that calculates the correlation value of the output of the approximate-by-function unit 313. The corresponding point estimation unit further includes an offset value calculation unit 315 that calculates the picture position offset that will give a maximum value of correlation as calculated by the correlation value calculation unit 314 to output the result as an offset value of the corresponding point.

In this corresponding point estimation unit 31A, the first partial picture region extraction unit 311 extracts the partial picture region of the frame picture as a template. The second partial picture region extraction unit 312 extracts partial picture region of another frame picture which is consecutive to the first stated frame picture. The partial picture regions is to be similar in shape to the partial picture region extracted by the first partial picture region extraction unit 311. The approximate-by-function unit 313 selects the partial picture regions, extracted by the first and second partial picture region extraction units 311, 312, so that the two partial picture regions will be in the same picture state. The approximate-by-function unit expresses the gray scale value of each converted picture in the form of a function by a piece-wise polynomial.

The corresponding point estimation unit 31 A captures the gray scale values of the picture as continuously changing states and estimates the corresponding points of the picture in accordance with the theory of the fluency information. The corresponding point estimation unit 31 A includes the first partial picture region extraction unit 311, second partial picture region extraction unit 312, function approximating unit 313, correlation value estimation unit 314 and the offset value calculation unit 315.

In the corresponding point estimation unit 31 A, the first partial picture region extraction unit 311 extracts a partial picture region of a frame picture.

The second partial picture region extraction unit 312 extracts a partial picture region of another frame picture which is consecutive to the first stated frame picture. This partial picture region is to be similar in shape to the partial picture region extracted by the first partial picture region extraction unit 311.

The function approximating unit 313 selects the partial picture regions, extracted by the first and second partial picture region extraction units 311, 312, so that the two partial picture regions extracted will be in the same picture state. In addition, the function approximating unit 313 expresses the gray scale value of each converted picture in the form of a function by a piece-wise polynomial in accordance with the fluency theory, and outputs the so expressed gray scale values.

The correlation value estimation unit 314 integrates the correlation values of outputs of the function approximating unit 313.

The offset value calculation unit 315 calculates a position offset of a picture that gives the maximum value of correlation as calculated by the correlation value estimation unit 314. The offset value calculation unit outputs the result of the calculations as an offset value of the corresponding point.

In this corresponding point estimation unit 31, the first partial picture region extraction unit 311 extracts the partial picture region of a frame picture as a template. The second partial picture region extraction unit 312 extracts a partial picture region of another frame picture that is consecutive to the first stated frame picture. The partial picture region extracted is to be similar in shape to the partial picture region extracted by the first partial picture region extraction unit 311. The approximate-by-function unit 313 selects the partial picture regions, extracted by the first and second partial picture region extraction units 311, 312 so that the two partial picture regions will be in the same picture state and expresses the gray scale value of each converted picture in the form of a function by a piece-wise polynomial.

It is now assumed that a picture $f_1(x,y)$ and a picture $f_2(x, y)$ belong to a space $S_{(m)}(R_2)$, and that øm(t) is expressed by a (m-2) degree piece-wise polynomial of the following equation (5):

[equation 43]

$$\hat{\phi}_m(\omega) := \int_{t \in R} e^{-i\omega t} \phi_m(t) dt = \left( \frac{1 - e^{-i\omega}}{i\omega} \right)^m \tag{5}$$

whilst the space $S_{(m)}(R_2)$ is expressed as shown by the following equation (6):

[equation 44]

$$S^{(m)}(R^2) = span \left\{ \phi_m(\cdot - k)\phi_m(\cdot - l) \right\}_{k,l \in Z} \tag{6}$$

the frame-to-frame correlation function $c(\tau_1, \tau_2)$ may be expressed by the following equation (7):

[equation 45]

$$c(\tau_1, \tau_2) = \iint f_1(x, y) f_2(x + \tau_1, y + \tau_2) dx dy \tag{7}$$

From the above supposition, viz.,

[equation 46]

$$f_1(x, y), f_2(x, y) \in S^{(m)}(R^2)$$

the equation (7), expressing the frame-to-frame correlation function, may be shown by the following equation (8):

[Equation 47]

$$c(\tau_1, \tau_2) \in S^{(2m)}(R^2)$$

(8)

Viz., the frame-to-frame correlation function $c(\tau_1, \tau_2)$ belongs to the space $S_{(2m)}(R_2)$ in which to perform 2m-degree interpolation shown in Fig.7, while the sampling frequency $\psi_{2m}(\tau_1, \tau_2)$ of the space $S_{(2m)}(R_2)$ in which to perform 2m-degree interpolation uniquely exists, and the above mentioned frame-to-frame correlation function $c(\tau_1, \tau_2)$ may be expressed by the following equation (9):

[Equation 48]

$$c(\tau_1, \tau_2) = \sum_k \sum_l c(k,l) \psi_{2m}(\tau_1 - l, \tau_2 - k)$$

(9)

From the equation (8), it is possible to construct the (2m-1) degree piece-wise polynomial for correlation plane interpolation.

Viz., by a block-based motion vector evaluation approach, initial estimation of the motion vectors of separate blocks of the equation (7) may properly be obtained. From this initial estimation, the equation (8) that will give a real motion of optional precision is applied.

The general form of a separable correlation plane interpolation function is represented by the following equation (10):

[Equation 49]

$$\psi_{2m}(x, y) = \sum_{k=-\infty}^{\infty} \sum_{l=-\infty}^{\infty} c_k d_l M_{2m}(x - k) \times M_{2m}(y - l)$$

(10)

where Ck and dl are correlation coefficients and $M_{2m}(x) = \emptyset_{2m}(x+2) \cdot \emptyset_m(x)$ is (m-1) degree B-spline.

By proper truncation limitation in the equation (10), the above mentioned correlation function $c(\tau_1, \tau_2)$ may be approximated by the following equation (11):

[Equation 50]

$$\hat{c}(\tau_1, \tau_2) = \sum_{k=K_1}^{K_2} \sum_{l=L_1}^{L_2} c(k,l) \psi_{2m}(\tau_2 - k) \times \psi_{2m}(\tau_2 - l)$$

(11)

where $K_1 = [\tau_1] - s + 1$, $K_2 = [\tau_2] + s$, $L_1 = [\tau_2] - s + 1$ and $L_2 = [\tau_2] + s$, and s determines $\emptyset_m(x)$.

A desired interpolation equation is obtained by substituting the following equation (12):

[Equation 51

$$\psi_4(x, y) = \sum_{k=-\infty}^{\infty} \sum_{l=-\infty}^{\infty} \sqrt{3}(\sqrt{3} - 2)^{|k|+|l|} M_4(x - k) \times M_4(y - l)$$

(12)

into the equation (11) in case m = 2, for example.

The motion vector may be derived by using the following equation (13):

[Equation 52]

$$\hat{v} = \arg\max_{\tau_1, \tau_2} \left[ \hat{c}(\tau_1, \tau_2) \right]$$

(13)

The above correlation function $c(\tau_1, \tau_2)$ may be recreated using only the information of integer points. The correlation value estimation unit 314 calculates a correlation value of an output of the function approximating unit 313 by the above correlation function $c(\tau_1, \tau_2)$.

The offset value calculation unit 315 calculates the motion vector V by the equation (13) that represents the position offset of a picture which will give the maximum value of correlation as calculated by the correlation value estimation unit 314. The offset value calculation unit outputs the resulting motion vector V as an offset value of the corresponding point.

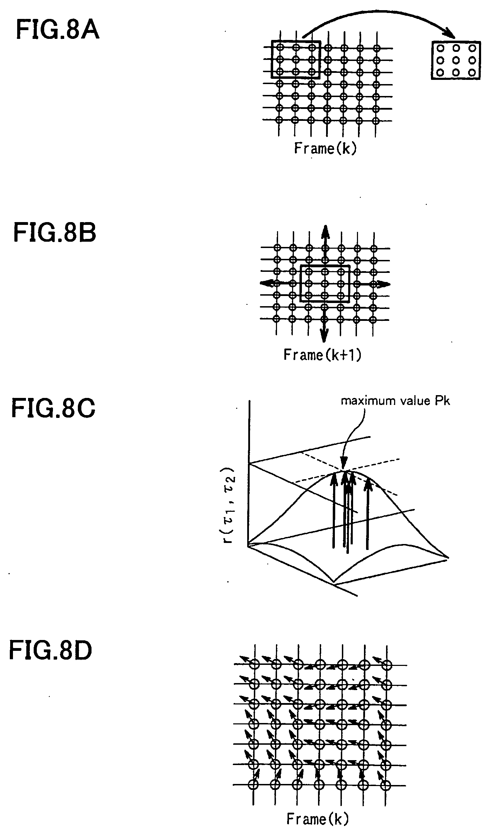

The manner of how the corresponding point estimation unit 31 A determines the motion vector by corresponding point estimation is schematically shown in Figs.8A to 8D. Viz., the corresponding point estimation unit 31A takes out a partial picture region of a frame picture (k), and extracts a partial picture region of another frame picture different from the frame picture (k), as shown in Fig.8A. The partial picture region is to be similar in shape to that of the frame picture (k). The corresponding point estimation unit 31A calculates the frame-to-frame correlation, using the correlation coefficient $c(\tau_1, \tau_2)$ represented by:

[Equation 53]

$$c(i, j) = \sum_l \sum_m f_k(l, m) f_{k+1}(l + i, m + j)$$

as shown in Fig.8B to detect the motion at a peak point of a curved surface of the correlation, as shown in Fig.8C, to find the motion vector by the above equation (13) to determine the pixel movement in the frame picture (k), as shown in Fig.8D.

In comparison with the motion vector of each block of the frame picture (k) by conventional block matching, the motion vector of each block of the frame picture (k), determined as described above, shows smooth transition between neighboring blocks.

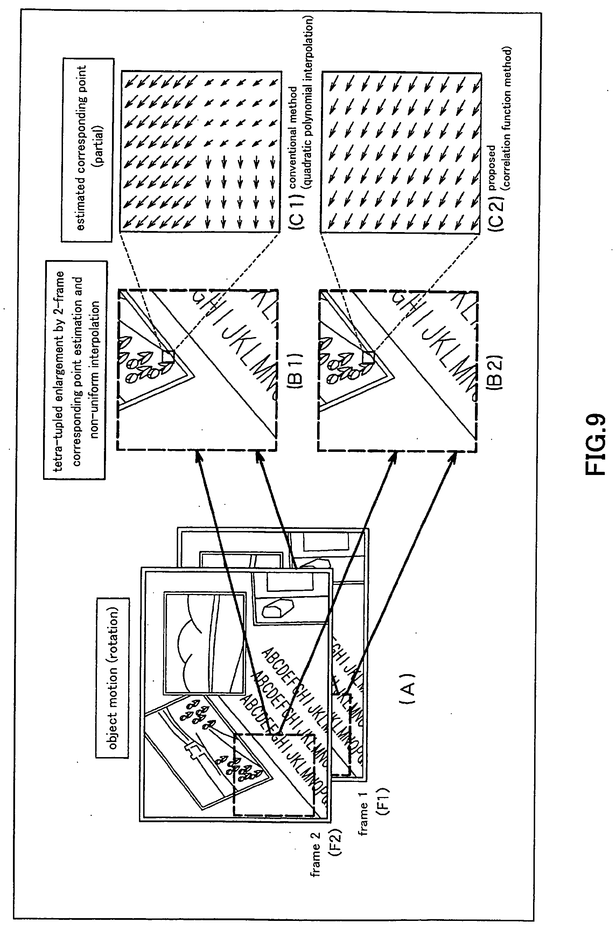

Viz., referring to Fig.9(A), frames 1 and 2, exhibiting a movement of object rotation, were enlarged by a factor of four by 2-frame corresponding point estimation and non-uniform interpolation. The motion vectors, estimated at the corresponding points by the conventional block matching, showed partially non-uniform variations, as shown in Figs.9 (B1), (C1). Conversely, the motion vectors, estimated at the corresponding points by the above described corresponding point estimation unit 31A, exhibit globally smooth variations, as shown in Figs.9(B2) and (C2). In addition, the volume of computations at 1/N precision, which is $N^2$ with the conventional technique, is N with the present technique,

The render-motion-into-function unit 31B uses the motion vector V, obtained by corresponding point estimation by the corresponding point estimation unit 31A, to render the picture information of the moving portion into the form of a function.

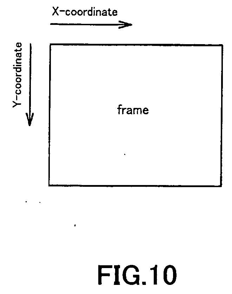

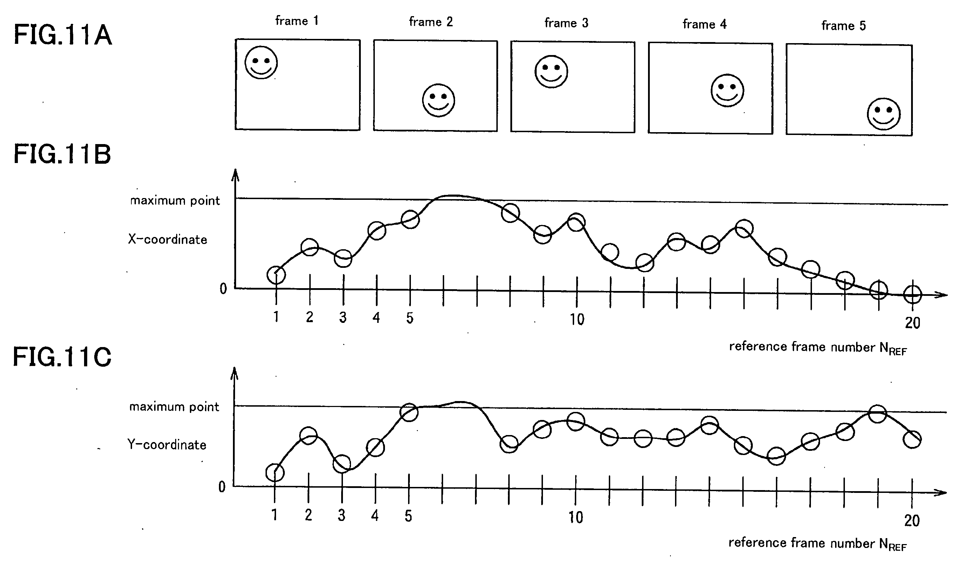

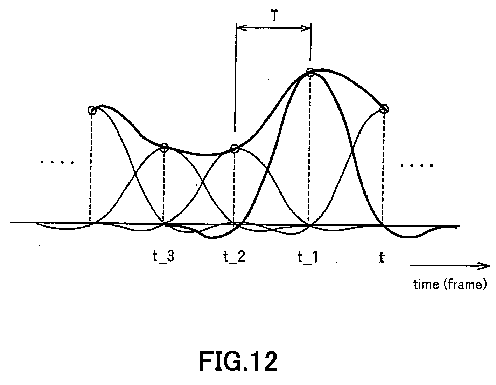

Viz., if once the corresponding point of the partial moving picture is estimated for each reference frame, in the render-motion-into-function unit 31B, the amount of movement, that is, the offset value, of the corresponding point, corresponds to the change in the frame's coordinate positions x, y. Thus, if the point of origin of the frame is set at an upper left corner, as shown in Fig.10, the render-motion-into-function unit 31B expresses the picture movement of each frame, shown for example in Fig.11A, as the movements of the frame's X- and Y-coordinates, as shown in Figs.11B and 11C. Thus, the render-motion-into-function unit 31B renders changes in the movements of the X- and Y-coordinates by a function by way of approximating the changes in movement into a function. The render-motion-into-function unit 31B estimates the inter-frame position T by interpolation with the function, as shown in Fig. 12, by way of performing the motion compensation.

On the other hand, the second render-into-function processor 32 encodes the input picture by the render-into-fluency-function processing, in which the information on the contour and the gray level as well as on the frame-to-frame information is approximated based on the theory of the fluency information. The second render-into-function processor 32 is composed of an automatic region classification processor 32A, a approximate-contour-line-by-function processor 32B, a render-gray-level-into-function processor 32C and an approximate-by-frequency- function processor 32D.

Based on the theory of the fluency information, the automatic region classification processor 32A classifies the input picture into a piece-wise planar surface region ($m \leq 2$), a piece-wise curved surface region ($m = 3$), a piece-wise spherical surface region ($m = \infty$) and an irregular region (region of higher degree, e.g., $m \geq 4$).

In the theory of the fluency information, a signal is classified by a concept of 'signal space' based on classes specified by the number of degrees m.

The signal space $_mS$ is expressed by a piece-wise polynominal of the (m-1) degree having a variable that allows for (m-2) times of successive differentiation operations.

It has been proved that the signal space $_mS$ becomes equal to the space of the step function for m = 1, while becoming equal to the space of the SINC function for m = ∞. A fluency model is such a model that, by defining the fluency sampling function, clarifies the relationship between the signal belonging to the signal space $_mS$ and the discrete time-domain signal.

The approximate-contour-line-by-function processor 32B is composed of an automatic contour classification processor 321 and an approximate-by-function processor 322. The approximate-contour-line-by-function processor 32B extracts line segments, arcs and quadratic (degree-2) curves, contained in the piece-wise planar region ($m \leq 2$), piece-wise curved surface region (m = 3) and the piece-wise spherical surface region (m = ∞), classified by the automatic region classification processor 32A, for approximation by a function by the approximate-by-function processor 322.

The render-gray-level-into-function processor 32C performs the processing of render-gray-level-into-function processing on the piece-wise planar region ($m \leq 2$), piece-wise curved surface region (m = 3) and the piece-wise spherical surface region (m = ∞), classified by the automatic region classification processor 32A, with the aid of the fluency function.

The approximate-by-frequency-function processor 32D performs the processing of approximation by the frequency function, by LOT (logical orthogonal transform) or DCT, for irregular regions classified by the automatic region classification processor 32A, viz., for those regions that may not be represented by polynomials.

This second render-gray-level-into-function processor 32 is able to express the gray level or the contour of a picture, using the multi-variable fluency function, from one picture frame to another.

The encoding processor 33 states the picture information, put into the form of the function by the first render-into-function processor 31 and the second render-into-function processor 32, in a predetermined form by way of encoding.

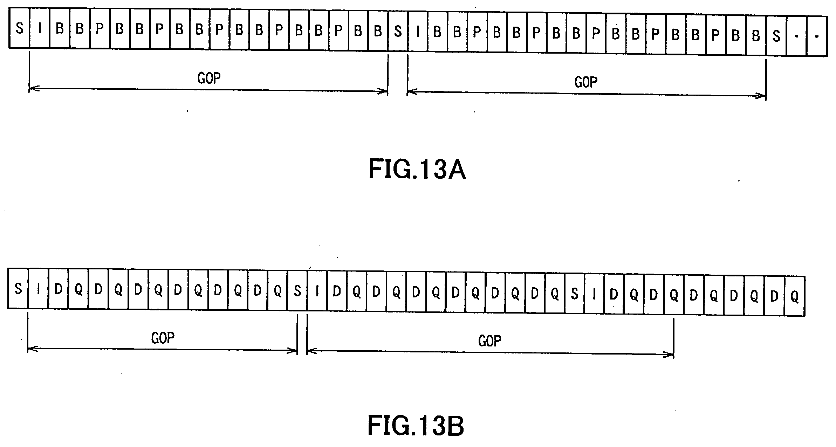

In MPEG encoding, an I-picture, a B-picture and a P-picture are defined. The I-picture is represented by frame picture data that has recorded a picture image in its entirety. The B-picture is represented by differential picture data as predicted from the forward and backward pictures. The P-picture is represented by differential picture data as predicted from directly previous I- and P-pictures. In the MPEG encoding, a picture data stream shown in Fig. 13A is generated by way of an encoding operation. The picture data stream is a string of encoded data of a number of pictures arranged in terms of groups of frames or pictures (GOPs) provided along the tine axis, as units. Also, the picture data stream is a string of encoded data of luminance and chroma signals having DCTed quantized values. The encoding processor 33 of the picture signal conversion system 100 performs the encoding processing that generates a picture data stream configured as shown for example in Fig.13B.

Viz., the encoding processor 33 defines an I-picture, a D-picture and a Q-picture. The I-picture is represented by frame picture function data that has recorded a picture image in its entirety. The D-picture is represented by frame interpolation differential picture function data of forward and backward I- and Q-pictures or Q- and Q-pictures. The Q-picture is represented by differential frame picture function data from directly previous I- or Q-pictures. The encoding processor 33 generates a picture data stream configured as shown for example in Fig.13B. The picture data stream is composed of a number of encoded data strings of respective pictures represented by picture function data, in which the encoded data strings are arrayed in terms of groups of pictures (GOPs) composed of a plurality of frames grouped together along the time axis.

It should be noted that a sequence header S is appended to the picture data stream shown in Figs.13A and 13B.

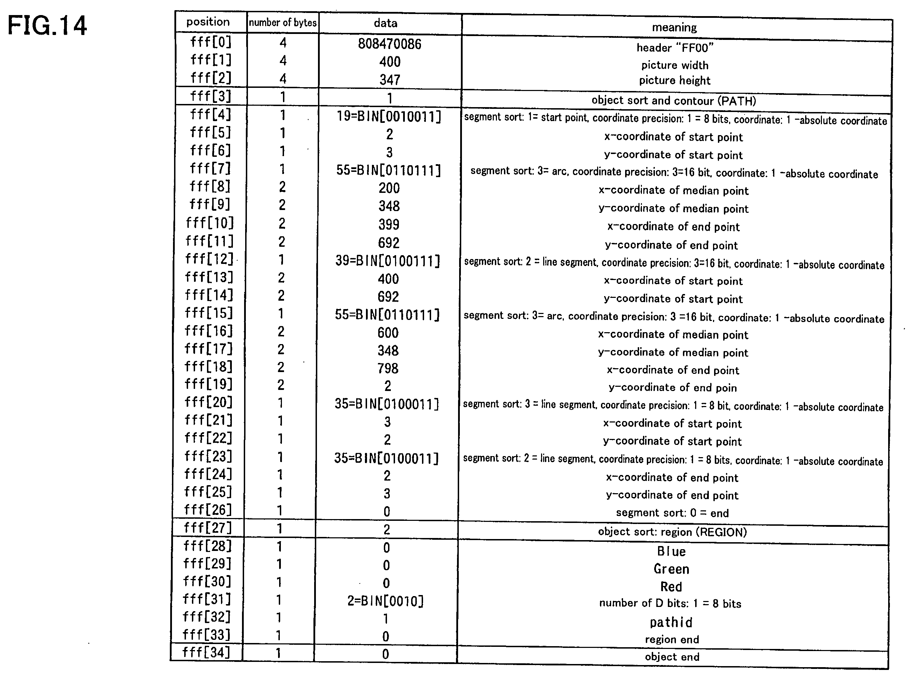

An example bit format of the I- and Q-pictures in the picture data stream generated by the encoding processor 33 is shown in Fig.14. Viz., the picture function data indicating the I- and Q-pictures includes the header information, picture width information, picture height information, the information indicating that the object sort is the contour, the information indicating the segment sort in the contour object, the coordinate information for the beginning point, median point and the terminal point, the information indicating that the object sort is the region, and the color information of the region object.

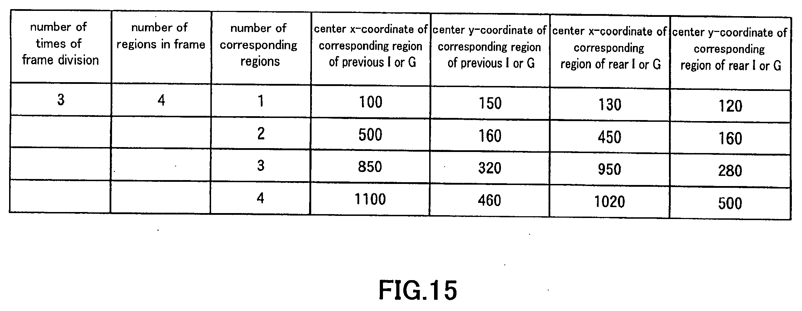

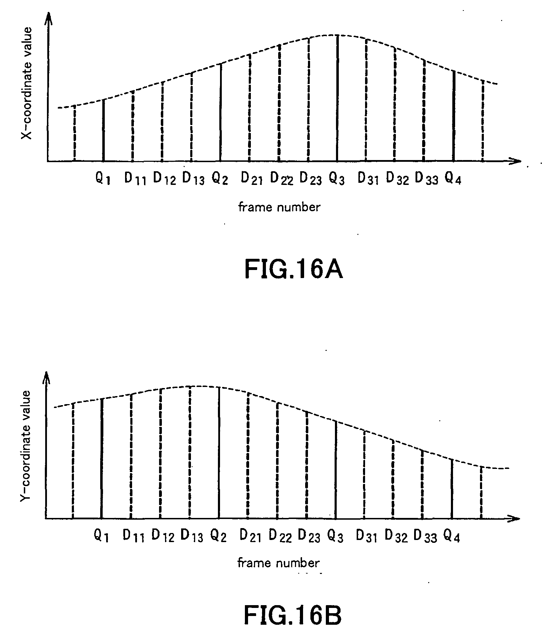

Fig.15 shows an example bit format of a D-picture in a picture data stream generated by the encoding processor 33. The picture function data, representing the D-picture, there is contained the information on, for example, the number of frame division, the number of regions in a frame, the corresponding region numbers, center X- and Y-coordinates of corresponding regions of a previous I-picture or a previous P-picture, and on the center X- and Y-coordinates of corresponding regions of the backward I-picture or the backward P-picture. Figs.16A and 16B show transitions of the X- and Y-coordinates of the corresponding points of the region number 1 in the example bit format of the D-picture shown in Fig. 15.

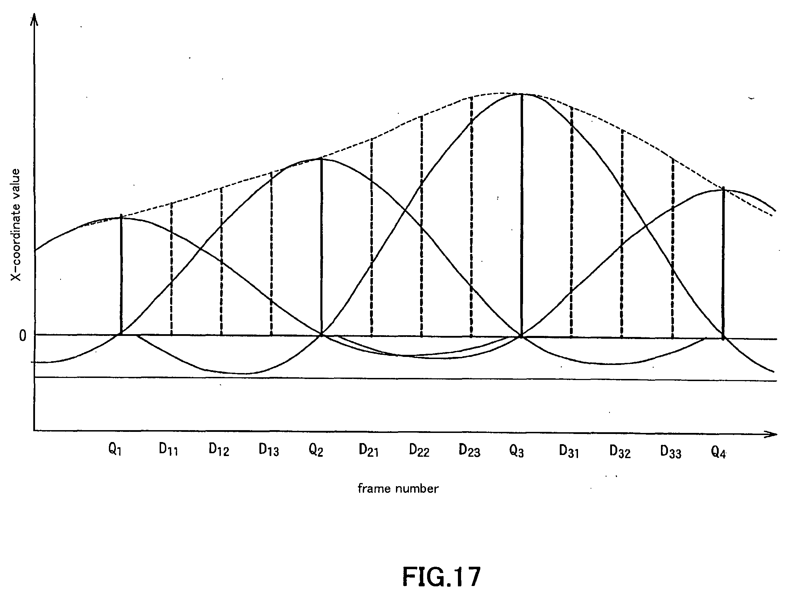

Referring to Fig. 17, the X-coordinate values of the D-pictures in the corresponding region (D21, D22 and D23) may be calculated by interpolation calculations from the X-coordinate values of previous and succeeding pictures (Q1, Q2, Q3 and Q4). The Y-coordinate values of the D-pictures in the corresponding region (D21, D22 and D23) may be calculated by interpolation calculations from the Y-coordinate values of previous and succeeding pictures (Q1, Q2, Q3 and Q4)

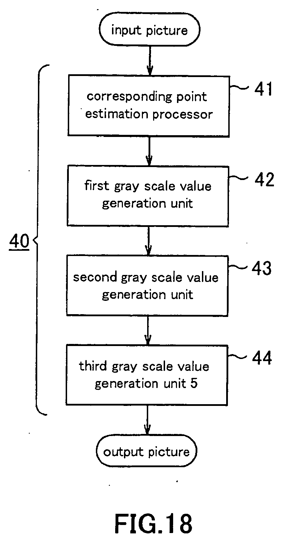

A frame rate conversion system 40 according to the embodiment of the present invention is constructed as shown for example in Fig. 18.

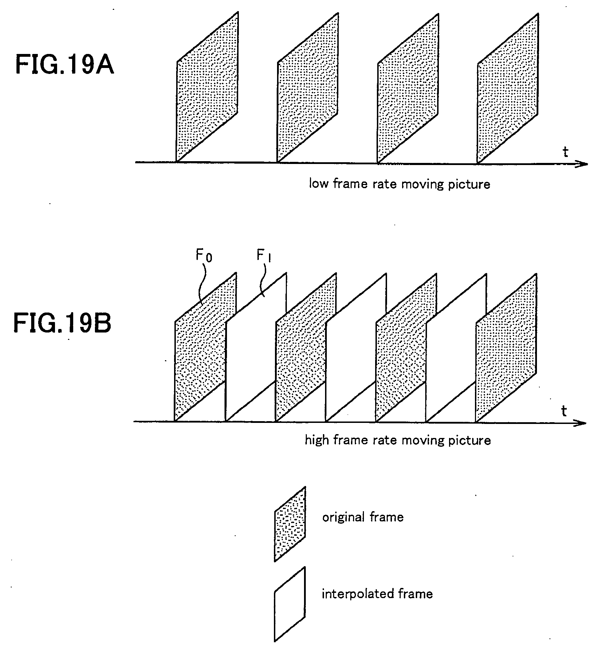

The present frame rate conversion system 40 introduces a frame for interpolations $F_1$ in-between original frames $F_0$, as shown for example in Figs.19A and 19B. The frame rate may be enhanced by converting a moving picture of a low frame rate, 30 frames per second in the present example, as shown in Fig.19A, into a moving picture of a high frame rate, 60 frames per second in the present example, as shown in Fig.19B. The frame rate enhancing unit 40 is in the form of a computer including a corresponding point estimation unit 41, a first gray scale value generation unit 42, a second gray scale value generation unit 43 and a third gray scale value generation unit 44.

In the present frame rate enhancing unit 40, the corresponding point estimation unit 41 estimates, for each of a large number of pixels in a reference frame, a corresponding point in each of a plurality of picture frames temporally different from the reference frame and from one another.

The first gray scale value generation unit 42 finds, for each of the corresponding points in the respective picture frames, as estimated by the corresponding point estimation unit 41, the gray scale value from gray scale values indicating the gray levels of neighboring pixels.

The second gray scale value generation unit 43 approximates, for each of the pixels in the reference frame, the gray levels on the locus of the corresponding points, based on the gray scale values of the corresponding points as estimated in the respective picture frames, by a fluency function. From this function, the second gray scale value generation unit finds the gray scale value of each corresponding point in each frame for interpolation.

The third gray scale value generation unit 44 then generates, from the gray scale value of each corresponding point in each frame for interpolation, the gray scale values of pixels in the neighborhood of each corresponding point in each frame for interpolation.

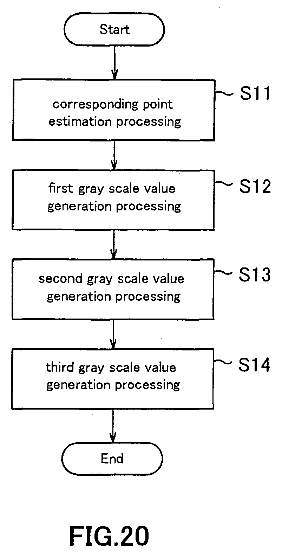

The present frame rate enhancing unit 40 in the present frame rate conversion system 100 executes, by a computer, a picture signal conversion program as read out from a memory, not shown. The frame rate conversion device performs the processing in accordance with the sequence of steps S11 to S 14 shown in the flowchart of Fig.20. Viz., using the gray scale value of each corresponding point, as estimated by corresponding point estimation, the gray scale value of each corresponding point of each frame for interpolation is generated by uniform interpolation. In addition, the gray scale values of the pixels at the pixel points in the neighborhood of each corresponding point in each frame for interpolation are generated by non-uniform interpolation, by way of processing for enhancing the frame rate.

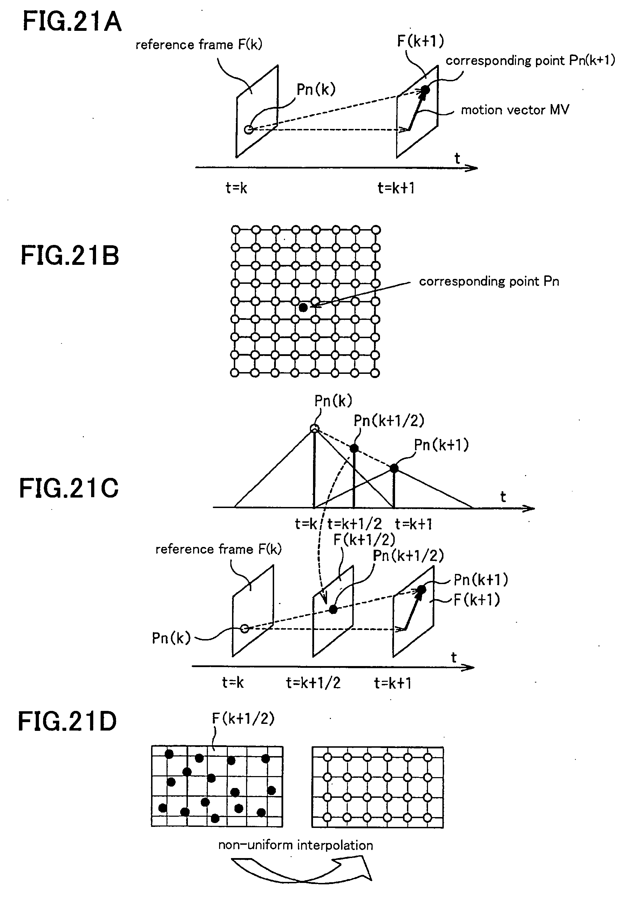

In more detail, in the, a picture frame at time t = k is set as a reference frame F(k), as shown in Fig.21A. Then, for each of a large number of pixels Pn(k) in the reference frame F(k), motion vectors are found for each of a picture frame F(k+1) at time t = k+1, a picture frame F(k+2) at time t = k+2, ···, a picture frame F(k+m) at time t = k+m to estimate corresponding points Pn(k+1), Pn(k+2), ···, Pn(k+m) in the picture frames F(k+1), F(k+2), ···, F(k+m), by way of performing the processing of estimating the corresponding points (step S11).

Then, for each of the corresponding points Pn(k+1), Pn(k+2). ···, Pn(k+m) in the picture frames F(k+1), F(k+2), ···, F(k+m), estimated in the above step S11, the gray scale value is found from the gray scale values representing the gray levels of the neighboring pixels, by way of performing the first processing for generation of the gray scale values, as shown in Fig.21B (step S12).

Then, for each of a large number of pixels Pn(k) in the reference frame F(k), the second processing for generation of the gray scale values is carried out, as shown in Fig.21C (step S3). In this second processing for generation of the gray scale values, the gray levels at the corresponding points Pn(k+1), Pn(k+2). ···, Pn(k+m), generated in the step S2, viz., the gray levels on the loci of the corresponding points in the picture frames F(k+1), F(k+2), ···, F(k+m), are approximated by the fluency function. From this fluency function, the gray scale values of the corresponding points in the frames for interpolations intermediate between the picture frames F(k+1), F(k+2), ···, F(k+m) are found (step S13).

In the next step S 14, the third processing for generation of the gray scale values is carried out, as shown in Fig.21D. In this processing, from the gray scale values of the corresponding points of a frame for interpolation F(k+1)/2, generated by the second processing of generating the gray scale value of step S 13, the gray scale values of pixels in the frame for interpolation F(k+1/2) at time t = k+1/2 are found by non-uniform interpolation (step S 14).

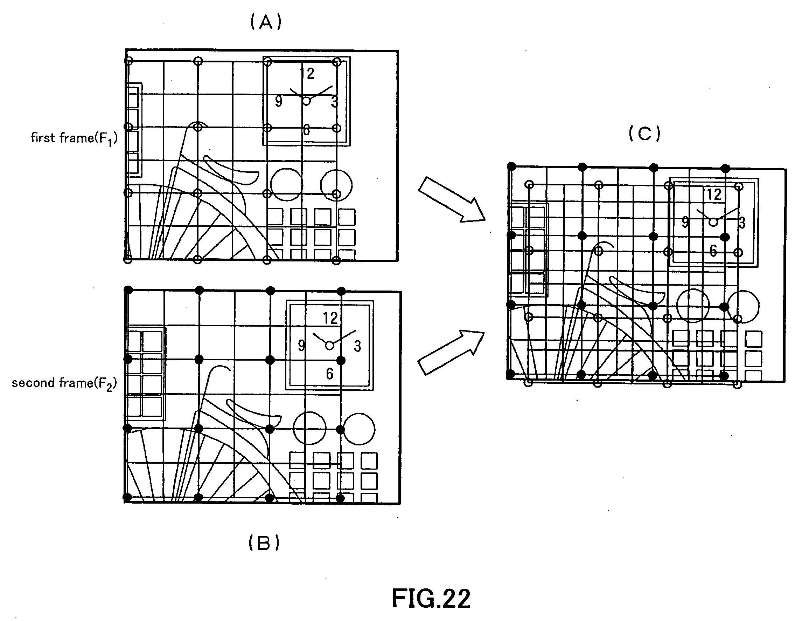

In a moving picture composed of a plurality of frames, the position in a frame of a partial picture performing the motion differs from one frame to another. Moreover, a pixel point on a given frame is not necessarily moved to a pixel point at a different position on another frame, but rather more probably the pixel point is located between pixels. Viz., if a native picture is arranged as the time-continuous information, the pixel information represented by such native picture would be at two different positions on two frames. In particular, if the new frame information is generated by interpolation between different frames, the picture information on the original frames would differ almost unexceptionally from the pixel information on the newly generated frame. Suppose that two frames shown at (A) and (B) in Fig.22 are superposed at certain corresponding points of each frame. In this case, the relationship among the pixel points of the respective frames, shown only roughly for illustration, is as shown in at (C) in Fig.22. That is, the two frames become offset a distance corresponding to the picture movement. If the gray scale values of lattice points of the first frame (non-marked pixel points) are to be found using these two frame pictures, the processing of non-uniform interpolation is necessary.

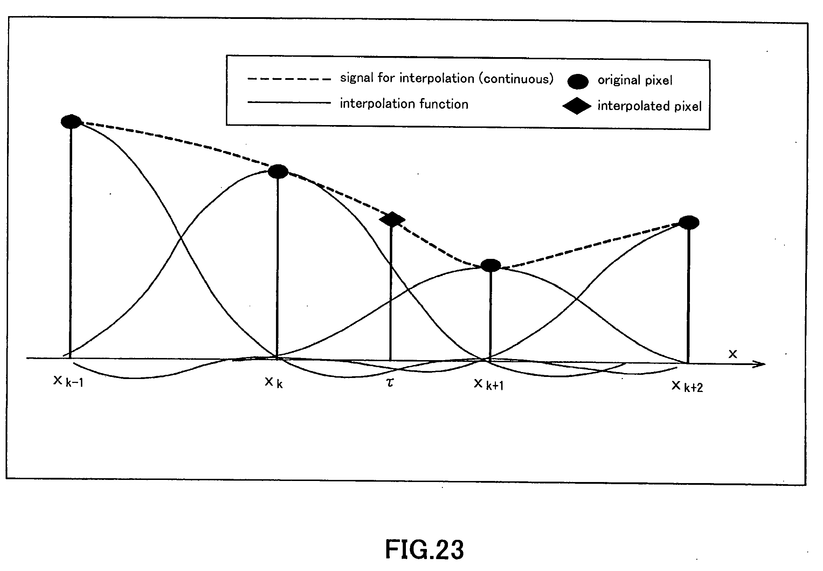

For example, the processing for picture interpolation of determining the value of the position of a pixel $u(\tau_x, \tau_y)$, newly generated on converting the picture resolution, is carried out by convolution of an original pixel $u(x_1, y_1)$ with an interpolation function $h(x)$, as shown in Fig.23:

[Equation 54]

$$ u\left(\tau_x, \tau_y\right) = \sum_{i=-\infty}^{\infty} \sum_{j=-\infty}^{\infty} u\left(x_i - y_j\right) h\left(\tau_x - x_i, \tau_y - y_j\right) $$

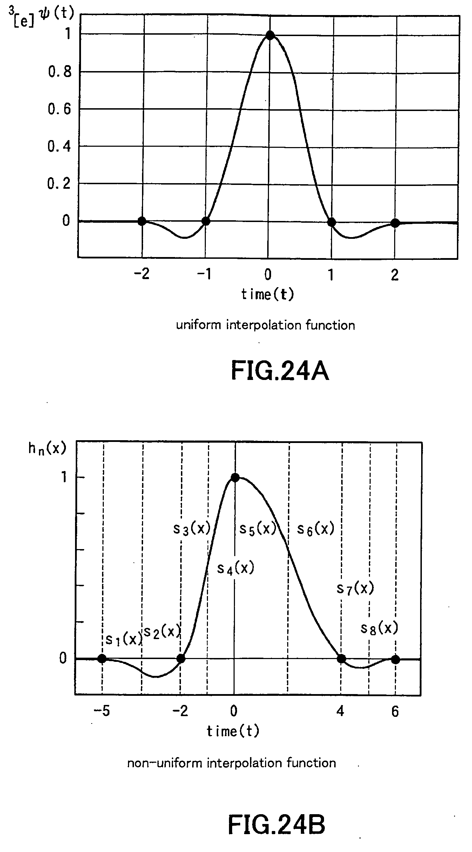

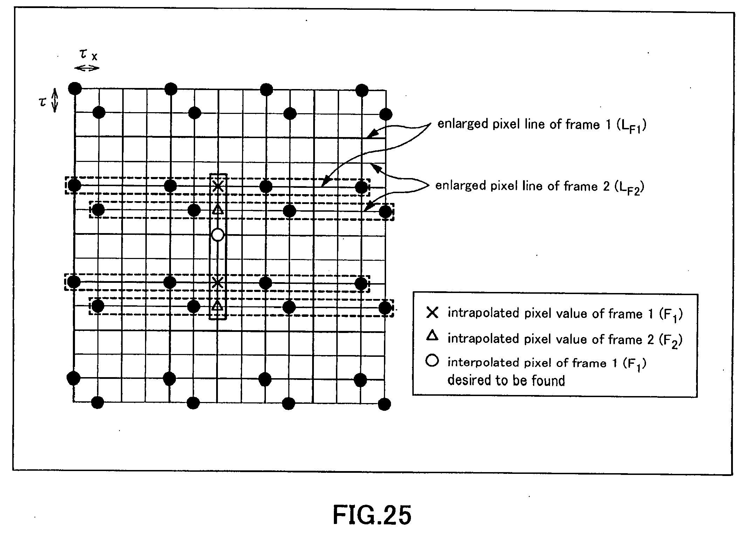

The same partial picture regions of a plurality of frame pictures are then made to correspond to one another. The interpolation information, as found from frame to frame by uniform interpolation from the pixel information of the horizontal (vertical) direction in the neighborhood of a desired corresponding point, using the uniform interpolation function shown in Fig.24(A), viz., the intrapolated pixel values x, $\Delta$ of the frames 1 (F1) and 2 (F2) (see Fig.25), as the pixel information in the vertical (horizontal) direction, are processed with non-uniform interpolation, based on the value of frame offset, using the non-uniform interpolation function shown in Fig.24(B). By so doing, the pixel information at a desired position ○ in the frame 1 is determined.

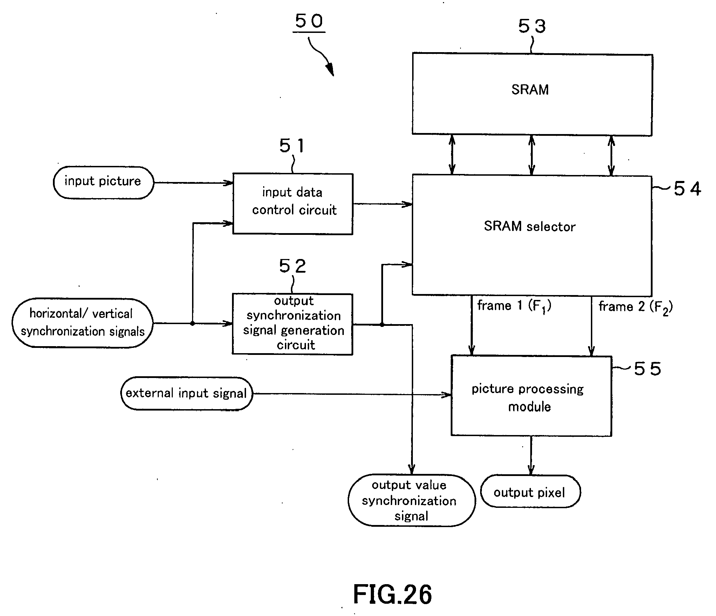

It should be noted that the frame rate enhancing processor 40 not only has the above described function of enhancing the frame rate, but also may have the function of performing the processing of enlarging interpolation with the use of two frame pictures. The function of the enlarging interpolation using two frame pictures may be implemented by an enlarging interpolation processor 50 including an input data control circuit 51, an output synchronization signal generation circuit 52, an SRAM 53, an SRAM selector 54 and a picture processing module 55, as shown for example in Fig.26.

In this enlarging interpolation processor 50, the input data control circuit 51 manages control of sequentially supplying an input picture, that is, the picture information of each pixel, supplied along with the horizontal and vertical synchronization signals, to the SRAM selector 54.

The output synchronization signal generation circuit 52 generates an output side synchronization signal, based on the horizontal and vertical synchronization signals supplied thereto, and outputs the so generated output side synchronization signal, while supplying the same signal to the SRAM selector 54.

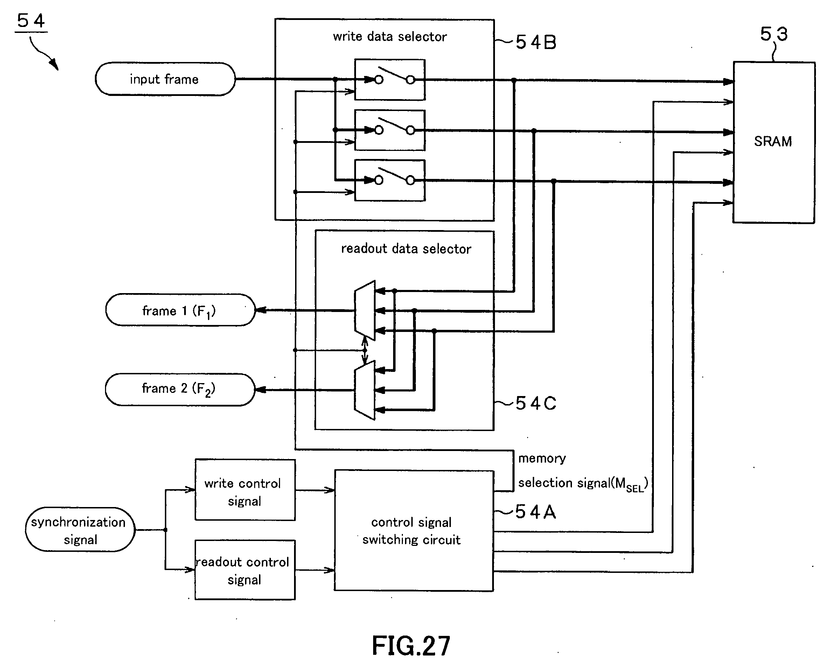

The SRAM selector 54 is constructed as shown for example in Fig.27, and includes a control signal switching circuit 54A, a write data selector 54B, a readout data selector 54C and an SRAM 53. The write data selector 54B performs an operation in accordance with a memory selection signal delivered from the control signal switching circuit 54A based on a write control signal and a readout control signal generated with the synchronization signals supplied. An input picture from the input data control circuit 51 is entered, on the frame-by-frame basis, to the SRAM 53, at the same time as two-frame pictures are read out in synchronization with the output side synchronization signal generated by the output synchronization signal generation circuit 52.

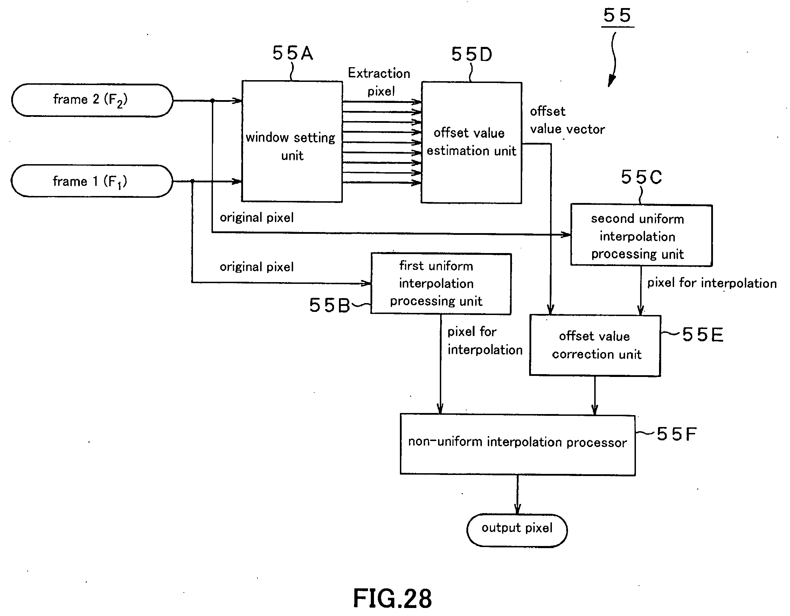

The picture processing module 55, performing the processing for picture interpolation, based on the frame-to-frame information, is constructed as shown in Fig.28.

Viz., the picture processing module 55 includes a window setting unit 55A supplied with two frames of the picture information read out simultaneously from the SRAM 53 via SRAM selector 54. The picture processing module also includes a first uniform interpolation processing unit 55B and a second uniform interpolation processing unit 55C. The picture processing module also includes an offset value estimation unit 55D supplied with the pixel information extracted from the above mentioned two-frame picture information by the window setting unit 55A. The picture processing module also includes an offset value correction unit 55E supplied with an offset value vector estimated by the offset value estimation unit 55D and with the pixel information interpolated by the second uniform interpolation processing unit 55C. The picture processing module further includes a non-uniform interpolation processor 55F supplied with the pixel information corrected by the offset value correction unit 55E and with the pixel information interpolated by the first uniform interpolation processing unit 55B.

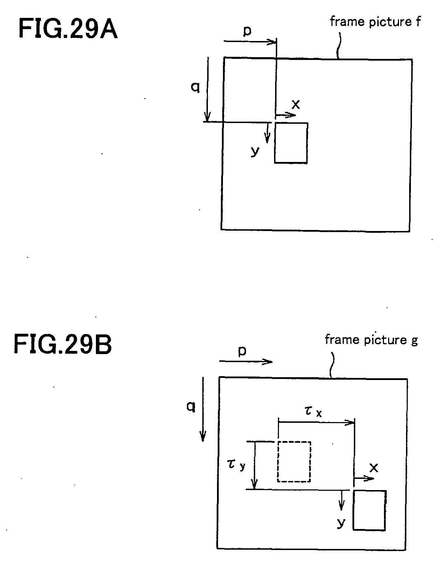

In the picture processing module 55, the window setting unit 55A sets a window at preset points (p, q) for two frame pictures f, g entered via the SRAM selector 54, as shown in Figs.29A and 29B. The offset value estimation unit 55D shifts the window of the frame picture g by an offset value ($\tau$x, $\tau$y). The picture processing module then performs scalar product operation for the pixel values of the relative position (x, y) in the window. The resulting value is to be a cross-correlation value Rpq ($\tau$x, $\tau$y).

[Equation 55]

$$Rpq\left(\tau_x, \tau_y\right) = \Sigma_x \Sigma_y \left[ f\left(p+x, q+y\right) g\left(p+x+\tau_x, q+y+\tau_y\right) \right]$$

The offset values ($\tau$x, $\tau$y) are varied to extract the offset value ($\tau$x, $\tau$y) which will maximize the cross-correlation value Rpq ($\tau$x, $\tau$y) around the point (p, q).

[Equation 56]

$$\text{offset value} \quad (\tau x, \tau y) = \{Rpq(\tau x, \tau y)\}_{max}$$

Meanwhile, it is also possible to Fourier transform in-window pixel data of the two frame pictures f, g in order to find the cross-correlation Rpq ($\tau$x, $\tau$y).

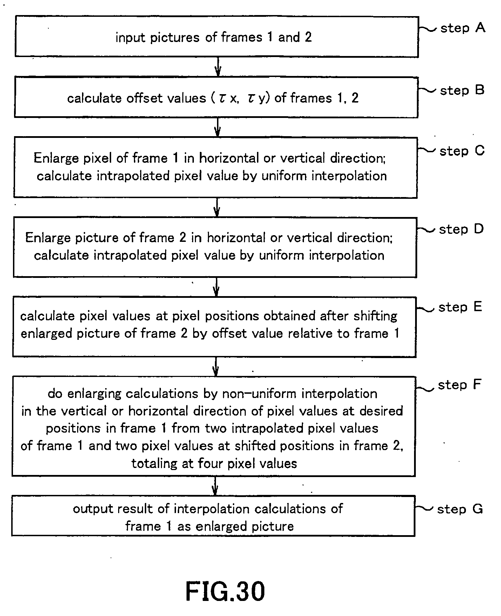

The present enlarging interpolation processor 50 executes the processing of enlarging interpolation in accordance with a sequence shown by the flowchart of Fig.30.

That is, if, in the picture processing module 55, the two frame pictures f, g are read out via the SRAM selector 54 from the SRAM 53 (step A), the offset value estimation unit 55D calculates, by processing of correlation, an offset value ($\tau$x, $\tau$y) of the two frame pictures f, g (step B).

Pixel values of the picture f of the frame 1, intrapolated by uniform interpolation, are calculated by uniform interpolation by the first uniform interpolation processing unit 55B for enlarging the picture in the horizontal or vertical direction (step C).

Pixel values of the picture g of the frame 2, intrapolated by uniform interpolation, are calculated by the second uniform interpolation processing unit 55C for enlarging the picture in the horizontal or vertical direction (step D).

Then, pixel values at pixel positions of the enlarged picture of the frame 2, shifted by the picture offset value relative to the frame 1, are calculated by the offset value correction unit 55E (step E).

The non-uniform interpolation processor 55F then executes enlarging calculations, from two intrapolated pixel values of the frame 1 and two pixel values of the frame 2 at the shifted position, totaling at four pixel values, on the pixel values of the positions of the frame 1, desired to be found, in the vertical or horizontal direction, by non-uniform interpolation (step F). The results of the interpolation calculations for the frame 1 are then output as an enlarged picture (step G).

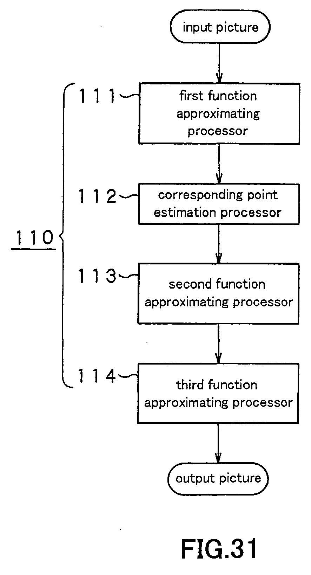

A frame rate conversion device 110, having the function of performing the processing of such enlarging interpolation, is constructed as shown for example in Fig.31.

The frame rate conversion device 110 is comprised of a computer made up of a first function approximating processor 111, a corresponding point estimation processor 112, a second function approximating processor 113 and a third function approximating processor 114.

The first function approximating processor 111 executes first function approximation processing of approximating the gray level distribution of the multiple pixels of the reference frame by a function.

The corresponding point estimation processor 112 performs correlation calculations, using the function of the gray level distribution in a plurality of reference frames at varying time points, as approximated by the first function approximating processor 111. The corresponding point estimation processor then sets respective positions that will yield the maximum value of correlation as the position of corresponding points in the multiple reference frames, by way of processing of corresponding point estimation.

The second function approximating processor 113 renders the corresponding point positions in each reference frame, estimated by the corresponding point estimation processor 112, into coordinate values corresponding to vertical and horizontal distances from the point of origin of the reference frame. Variations in the vertical and horizontal positions of the coordinate values in the multiple reference frames at varying time points are converted into time series signals, which time series signals are then approximated by a function, by way of the second approximation by a function,

The third function approximating processor 114 uses the function approximated by the second function approximating processor 113, for a frame for interposition at an optional time point between multiple reference frames, to find the gray scale value at corresponding points of the frame for interpolation by interpolation with the gray scale values at the corresponding points in the reference frame. The corresponding points are the corresponding points of the frame for interpolation relevant to the corresponding points on the reference frame. The above mentioned first function approximation is made to fit with the gray scale value of the corresponding point of the frame for interpolation to find the gray scale distribution in the neighborhood of the corresponding point. The gray scale value in the neighborhood of the corresponding point is converted into the gray scale value of the pixel point in the frame for interpolation by way of performing the third function approximation.

In the present frame rate conversion device 110, the first function approximating processor 111 performs function approximation of the gray scale distribution of a plurality of pixels in the reference frame. The corresponding point estimation processor 112 performs correlation calculations, using the function of the gray scale distribution in the multiple reference frames at varying time points as approximated by the first function approximating processor 111. The positions that yield the maximum value of correlation are set as point positions corresponding to pixels in the multiple reference frames. The second function approximating processor 113 renders the corresponding point positions in each reference frame, estimated by the corresponding point estimation processor 112, into coordinate points in terms of vertical and horizontal distances from the point of origin of the reference frame. Variations in the vertical and horizontal positions of the coordinate points in the multiple reference frames, taken at varying time points, are converted into a time series signal, which time series signal is then approximated by a function. The third function approximating processor 114 uses the function approximated by the second function approximating processor 113 to find the gray scale values at corresponding point positions of the frame for interpolation by interpolation with the gray scale values at the corresponding points of the reference frame. The corresponding point position of the frame for interpolation is relevant to a corresponding point position in the reference frame. The above mentioned first function approximation is made to fit with the gray scale value of the corresponding point of the frame for interpolation to find the gray scale distribution in the neighborhood of the corresponding point. The gray scale value in the neighborhood of the corresponding point of the reference frame is converted into the gray scale value of the pixel point in the frame for interpolation by way of performing third function approximation.

In the picture signal conversion system 100, the pre-processor 20 removes the noise from the picture information, supplied from the picture input unit 10, such as a picture pickup device. The compression encoding processor 30 encodes the picture information, freed of the noise by the pre-processor 20, by way of signal compression. The frame rate enhancing unit 40, making use of the frame rate conversion device 1, traces the frame-to-frame corresponding points, and expresses the time transitions by a function to generate a frame for interpolation, expressed by a function, based on a number ratio of the original frame(s) and the frames to be generated on conversion.

Viz., the present picture signal conversion system 100 expresses e.g., the contour, using a larger number of fluency functions, from one picture frame to another, while expressing the string of discrete frames along the time axis by a time-continuous function which is based on the piece-wise polynomial in the time domain. By so doing, the high-quality pictures may be reproduced at an optional frame rate.

In the theory of the fluency information, the signal space of a class specified by the number of degrees m is classified based on the relationship that a signal may be differentiated continuously.

For any number m such that m > 0, the subspace spanned is represented by a (m - 1) degree piece-wise polynomial that may be continuously differentiated just (m-2) number of times.

The sampling function $\psi(x)$ of the class (m = 3) may be expressed by linear combination of the degree-2 piece-wise polynomial that may be continuously differentiated only once, by the following equation (14):
[Equation 57]

$$\psi(x) = -\frac{\tau}{2}\phi\left(x + \frac{\tau}{2}\right) + 2\tau\phi(x) - \frac{\tau}{2}\phi\left(x - \frac{\tau}{2}\right) \tag{14}$$

where ø(x) may be represented by the following equation (15):
[Equation 58]

$$\phi(x) = \int_{-\infty}^{\infty}\left(\frac{\sin \pi f\tau}{\pi f\tau}\right)^3 e^{j2\pi fx}df \tag{15}$$

Since $\psi(x)$ is a sampling function, the function of a division may be found by convolution with the sample string.

If $\tau = 1$, the equation (13) may be expressed by a piece-wise polynomial given by the following equation (16):

[Equation 59]

$$h_f(x) = \begin{cases} -\dfrac{7}{4}x^2 + 1 & |x| \in \left[-\dfrac{1}{2}, \dfrac{1}{2}\right] \\ \dfrac{5}{4}x^2 - 3|x| + \dfrac{7}{4} & |x| \in \left[\dfrac{1}{2}, 1\right] \\ \dfrac{3}{4}x^2 - 2|x| + \dfrac{5}{4} & |x| \in \left[1, \dfrac{3}{2}\right] \\ -\dfrac{1}{4}x^2 + |x| - 1 & |x| \in \left[\dfrac{3}{2}, 2\right] \\ 0 & otherwise \end{cases} \qquad (16)$$

For example, the non-uniform fluency function of the class (m = 3):

[Equation 60]

$$h_f(x)$$

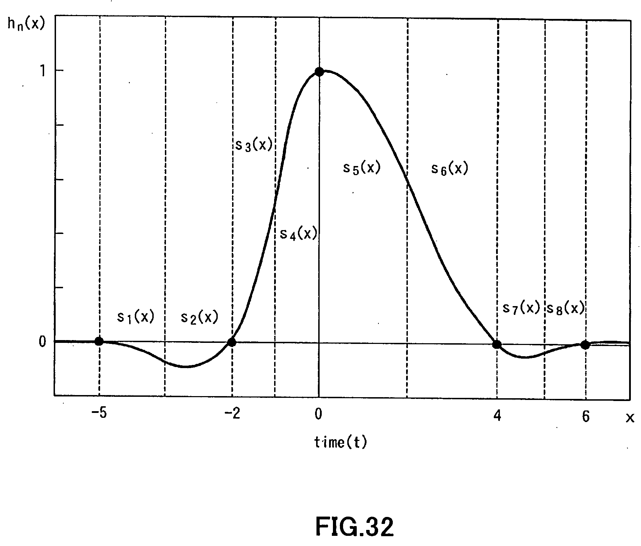

is a function shown in Fig.32.
A non-uniform interpolation fluency function

[Equation 61]

$$h_n(x)$$

is composed of eight piece-wise polynomials of the degree 2. A non-uniform interpolation fluency function of the (m = 3) class is determined by the non-uniform interval specified by $s_t(x) \sim s_8(x)$, as shown in Fig. 32, and its constituent elements may be given by the following equation (17):
[Equation 62]

$$\begin{cases} s_1(t) = -B_1(t - t_{-2})^2 \\ s_2(t) = B_1(3t - t_{-1} - 2t_{-2})(t - t_{-1}) \\ s_3(t) = -B_2(3t - 2t_0 - t_{-1})(t - t_{-1}) + \dfrac{2(t - t_{-1})^2}{(t_0 - t_{-1})^2} \\ s_4(t) = B_2(t - t_0)^2 - \dfrac{2(t - t_0)^2}{(t_0 - t_{-1})^2} \\ s_5(t) = B_3(t - t_0)^2 - \dfrac{2(t - t_0)^2}{(t_0 - t_1)^2} \\ s_6(t) = -B_3(3t - 2t_0 - t_1)(t - t_1) + \dfrac{2(t - t_1)^2}{(t_0 - t_1)^2} \\ s_7(t) = B_4(3t - t_1 - 2t_2)(t - t_1) \\ s_8(t) = -B_4(t - t_2)^2 \end{cases} \qquad (17)$$

where

[Equation 63]

$$\begin{cases} B_1 = \dfrac{t_0 - t_{-2}}{4(t_0 - t_{-1})^2(t_{-1} - t_{-2}) + 4(t_{-1} - t_{-2})^3} \\[2ex] B_2 = \dfrac{t_0 - t_{-2}}{4(t_0 - t_{-1})(t_{-1} - t_{-2})^2 + 4(t_0 - t_{-1})^3} \\[2ex] B_3 = \dfrac{t_2 - t_0}{4(t_2 - t_1)^2(t_1 - t_0) + 4(t_1 - t_0)^3} \\[2ex] B_4 = \dfrac{t_2 - t_0}{4(t_2 - t_1)(t_1 - t_0)^2 + 4(t_2 - t_1)^3} \end{cases}$$

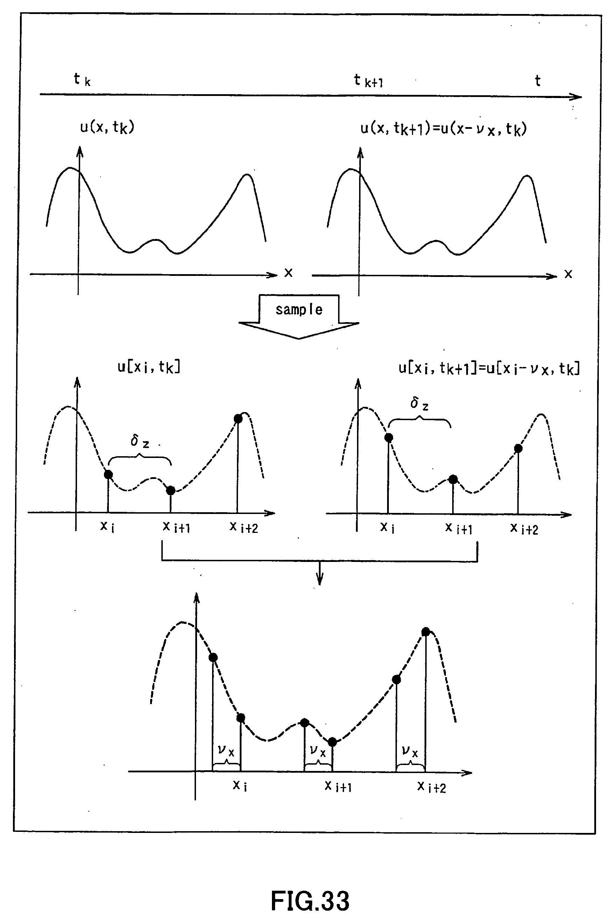

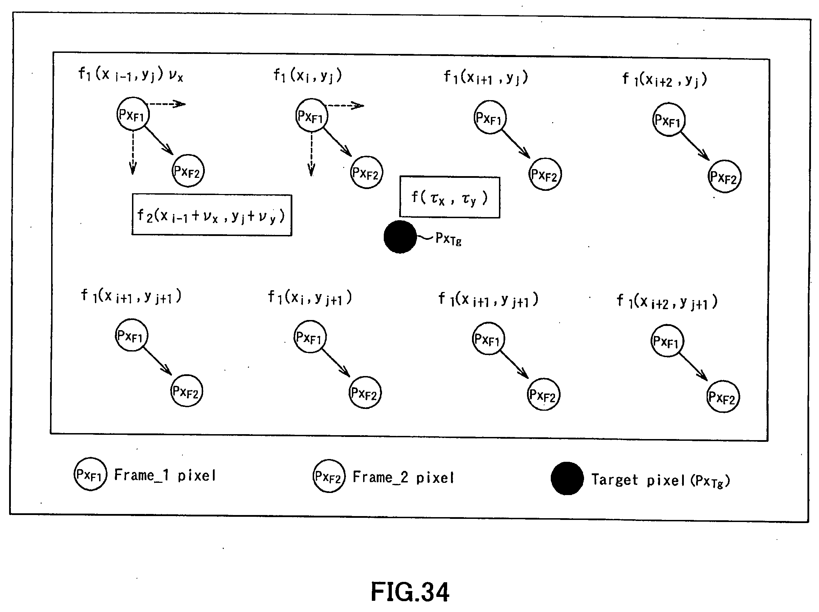

A real example of high resolution interpolation is shown in Fig.33. A concrete example of the pixel structure for interpolation is shown in Fig.34.

In Fig.34, a pixel $Px_{F1}$ of Frame_1 has a different motion vector that varies pixel $Px_{F2}$ in Frame_2:

[Equation 64]

$$\hat{v} = \left( \hat{v}_x , \hat{v}_y \right)$$

A pixel $Px_{\tau S}$ is a target pixel of interpolation.

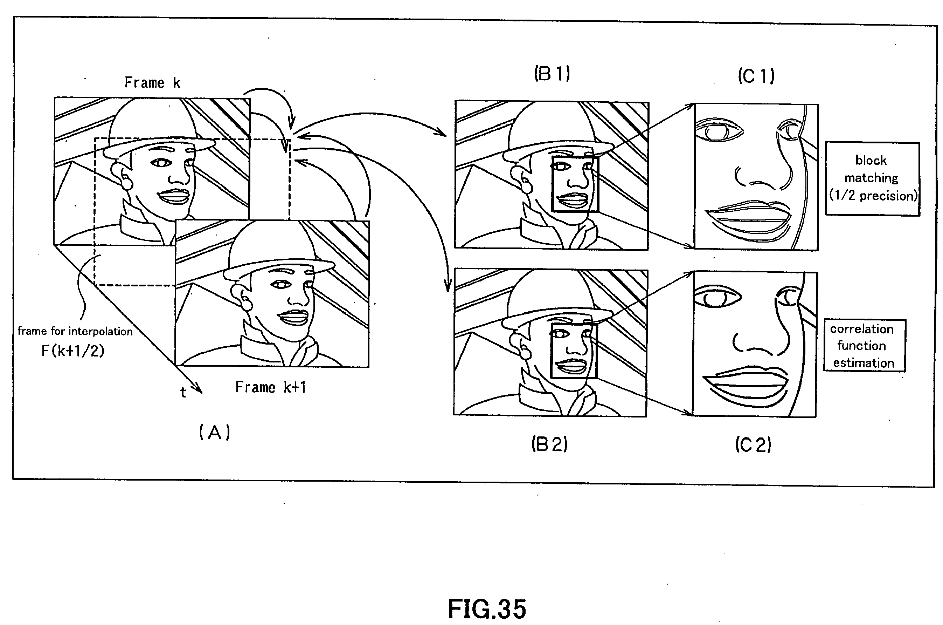

Fig.35 shows the concept of a one-dimensional image interpolation from two consecutive frames.

Motion evaluation is by an algorithm of full-retrieval block matching whose the block size and the retrieval window size are known.

A high resolution frame pixel is represented by $f(\tau_x, \tau_y)$. Its pixel structure is shown in an example of high resolution interpolation approach shown in Fig.34.

In a first step, two consecutive frames are obtained from a video sequence and are expressed as $f_1(x, y)$ and $f_2(x, y)$.

In a second step, an initial estimation of a motion vector is made.

The initial estimation of the motion vector is made by:

[Equation 65]

$$v_r = \underset{(u,v)}{\arg\max} \left[ \tilde{v}(u, v) \right]$$

where
[Equation 66]

$$\hat{v}(u,v)= \frac{\sum_{x,y}\left[f_1(x,y)-\bar{f}_{wa}\right]\left[f_2(x+u,x+v)-\bar{f}_{ta}\right]}{\left[\sum_{x,y}\left[f_1(x,y)-\bar{f}_{wa}\right]^2\left[f_2(x+u,x+v)-\bar{f}_{ta}\right]^2\right]^{0.5}} \qquad (18)$$

in which equation (18):

[Equation 67]

$$\bar{f}_{wa}$$

represents an average value of search windows, and

[Equation 68]

$$\bar{f}_{ta}$$

represents an average value of current block in matching.

In a third step, for the total of the pixels that use the equations (13) and (17):

[Equation 69]

$$\hat{v}=\left(\hat{v}_x,\hat{v}_y\right)$$

a motion vector is obtained from a sole pixel in the neighborhood of the motion vector from the second step:

[Equation 70]

$$v_r$$

In a fourth step, the uniform horizontal interpolation is executed as follows:
[Equation 71]

$$f_1(\tau_x, y_j) = \sum_{i=1}^{4} f_1(x_i, y_j) h_f(\tau_x - x_i) \quad (j = 1,2)$$

$$f_2(\tau_x, y_j - \hat{v}_y) = \sum_{i=1}^{4} f_2(x_i - \hat{v}_x, y_j - \hat{v}_y) \times h_f(\tau_x - x_i + \hat{v}_x) \quad (j = 1,2) \tag{19}$$

In a fifth step, the non-uniform vertical interpolation that uses the pixel obtained in the fourth step is executed in accordance with the equation (20):
[Equation 72]

$$f(\tau_x, \tau_y) = \sum_{j=1}^{2} f_1(\tau_x, y_j) h_n(\tau_y - y_j) + \sum_{j=1}^{2} f_2(\tau_x, y_j - v_y) h_n(\tau_y - y_j + v_y) \tag{20}$$

The fourth and fifth steps are repeated with a high resolution for the total of the pixels.

In the encoding of moving pictures, which is based on the fluency theory, a signal space suited to the original signal is selected and render-into-function processing is carried out thereon, so that high compression may be accomplished as sharpness is maintained.

The function space, to which belongs the frame-to-frame correlation function, is accurately determined, whereby the motion vector may be found to optional precision.

In the encoding of moving pictures, which is based on the fluency function, a signal space suited to the original signal is selected and render-into-function processing is carried out, whereby high compression may be accomplished as sharpness is maintained.

The frame-to-frame corresponding points are traced and temporal transitions thereof are expressed in the form of the function, such as to generate a frame for interpolation, expressed by a function, based on the number ratio of the original frame and frames for conversion. By so doing, a clear picture signal with smooth motion may be obtained at a frame rate suited to a display unit.

Suppose that a frame is to be generated at an optional time point between a frame k and a frame k+1, as shown in Fig.35(A), and that, in this case, a frame for interpolation F(k+1/2) is generated by uniform interpolation to find the motion information by 1/2 precision motion estimation, as conventionally. Also suppose that, using the motion information, thus obtained, the gray scale value of a corresponding point is generated by 1/2 precision by block matching, again as conventionally, by way of performing the frame rate enhancing processing. In this case, a picture of the frame for interpolation introduced undergoes deterioration in picture quality in the moving picture portion, as shown in Fig.35 (B1) and (C1). However, in the frame rate enhancing processing, performed using the frame rate enhancing unit 40, gray scale values of the corresponding points of the interpolated frames are generated by uniform interpolation from the gray scale values of the corresponding points as estimated by the processing of corresponding point estimation. The gray scale values of the corresponding points of the interpolated frames are then found by non-uniform interpolation. Hence, the frame rate may be enhanced without the moving picture portion undergoing deterioration in picture quality, as shown in Fig.35 (B2), (C2).

In the present picture signal conversion system 100, the input picture information at the picture input unit 10, such as picture pickup device, is freed of noise by the pre-processor 20. The picture information thus freed of noise by the pre-processor 20 is encoded for compression by the compression encoding processor 30. The frame rate enhancing unit 40 traces the frame-to-frame corresponding points. The frame rate enhancing unit then expresses the temporal transitions thereof by a function to generate a frame for interpolation, by a function, based on the number ratio of the original frame and the frames for conversion. By so doing, the picture information encoded for compression by the compression encoding processor 30 is enhanced in its frame rate, thus generating a clear picture signal showing a smooth movement.

**Claims**

1. A picture signal conversion system (100) comprising:

a pre-processor (20) configured to perform pre-processing of an input picture signal f(x,y) input to the picture signal conversion system (100) by a picture input unit (10); wherein
the pre-processor (20) includes a picture model (21) that deteriorates an input picture signal f(x,y) by a blurring function H(x,y), and outputs an observed picture signal g(x,y) obtained by adding a noise n(x,y) to the deteriorated input picture signal;
the pre-processor (20) is configured to estimate a difference between the observed picture signal g(x,y) and the input picture signal f(x,y) and to recursively optimize the blurring function H(x,y) based on the estimated difference H(x,y)*f(x,y) is representatively expressed as Hf, by:

$$\text{setting } H = A \otimes B; (A \otimes B)f = vec(BFA^T), vec(F) = f$$

where $\otimes$ denotes a Kronecker operator, and *vec* is an operator that extends a matrix in the column direction to generate a column vector;
estimating the blurring function H of the deterioration model by setting

$$H_{SVD} = U\Sigma V^T, A = U_A \Sigma_A V_A^T, B = U_B \Sigma_B V_B^T$$

and hence

$$H = (U_A \otimes U_B)(\Sigma_A \otimes \Sigma_B)(V_A \otimes V_B)^T$$

calculating a new target picture $g_E$ as $g_E = (\beta C_{EP} + \gamma C_{EN})g$, where $\beta$ and $\gamma$ are control parameters and $C_{EP}$, $C_{EN}$ are respectively operators for edge saving and edge emphasis, and as $g_{KPA} = vec(B_G E AT)$, $vec(G_E) = g_E$
performing minimizing processing on the new picture calculated $g_{KPA}$ by minimizing over f(x,y), thereby

obtaining $f_k(x,y)$: $\min_f \left\{ \|H_k f - g_{KPA}\|^2 + \alpha\|Cf\|^2 \right\}$, where $\alpha$ and C are control parameters;

verifying whether or not $f_k(x,y)$ meets a test condition;
if the test condition is not met, performing minimizing processing on the blurring function H(x,y) of the deterioration model: $\min_H \left\{ \|Hf_k - g_{KPA}\|^2 \right\}$; and

iterating the mimimization of f(x,y) and H(x,y) until $f_k(x,y)$ obtained by the minimizing processing on the new picture $g_{KPA}(x,y)$ meets the test condition;

the pre-processor (20) extracts $f_k(x,y)$ as estimation of the input picture signal f(x,y), if the test condition $\|H_k f_k - g_{KPA}\|^2 + \alpha\|Cf_k\|^2 < \varepsilon^2, k > c$ is met, where k is the number of times of repetition, and $\varepsilon$, c denote threshold values for decision;
an encoding processor (30) configured

to estimate corresponding points between a plurality of frame pictures included in the input picture signal f(x,y) freed of noise by the pre-processor (20) as corresponding point information by determining correlation values between points of different frame pictures, by estimating points having maximum correlation values as corresponding points, and by determining a coordinate offset value between corresponding points,
to render a moving portion of the input picture signal f(x,y) into a motion vector V as motion information of the input picture signal f(x,y) by using the coordinate offset values between corresponding points and by approximating changes of corresponding points in each coordinate direction due to movement by functions that interpolate between the coordinate values of the corresponding points;

to classify the frame pictures of the input picture signal f(x,y) according to m into a piece-wise planar surface region for m $\leq$ 2, into a piece-wise curved surface region for m = 3, into an irregular region for 4 $\leq$ m < $\infty$, and into a piece-wise spherical surface region for m = $\infty$;

to render a picture gray level of a region of a frame picture of the input picture signal f(x,y) that has been classified according to m, if an intensity distribution of the region is expressible by a polynomial, into a function of an according signal spaces $_mS$, by approximating the picture gray level by a surface function of the according signal space $_mS$, and

to render a picture contour line of the region of the frame picture of the input picture signal f(x,y) that has been classified according to m, if the picture contour line is expressible by a polynomial, into a function of an according signal spaces $_mS$, by approximating the picture contour line by a picture contour line function of the according signal space $_mS$;

to encode picture information about the input picture signal f(x,y) by compressing surface functions and picture contour line functions in a predetermined form; wherein

the signal spaces $_mS$ are formed of degree (m-1) piece-wise polynomial functions being (m-2) times differentiable; and

a frame rate enhancing processor (40) configured to enhance the frame rate of the input picture signal f(x,y) encoded for compression by the encoding processor (30).

2. The picture signal conversion system (100) according to claim 1, wherein
the encoding processor (30) comprises
a corresponding point estimation unit (31A) for performing the estimation of corresponding points;
a first render-into-function processor (31B) for expressing the motion information into the motion vector;
a second render-into-function processor (32) for classifying the input picture signal f(x,y) and for rendering the input picture signal f(x,y) into picture information in the form of the surface function and the picture contour line function; and
an encoding processor (33) for stating, in a preset form, the motion information, and the picture information to encode the input picture signal by compression.

3. The picture signal conversion system (100) according to claim 2, wherein
the corresponding point estimation unit (31A) comprises:

first partial region extraction means (311) for extracting a partial region of a frame picture;
second partial region extraction means (312) for extracting a partial region of another frame picture having the same shape to the partial region extracted by the first partial region extraction means (311);
approximate-by-function means (313) for expressing the gray levels of the selected partial regions by piece-wise polynomials and for outputting the piece-wise polynomials;
correlation value calculation means (314) for calculating the correlation values of outputs of the approximate-by-function means; and
offset value calculation means (315) for calculating the position offset of the partial regions that will give a maximum value of the correlation calculated by the correlation value calculation means to output the calculated values as the coordinate offset values of the corresponding points.

4. The picture signal conversion system (100) according to claim 2, wherein
the second render-into-function processor (32) includes

an automatic region classification processor (32A) that classifies the input picture signal f(x,y); and
a render-into-function processing section that renders the picture information, including a render-gray-level-into-function processor (32C) that approximates the picture gray level by the surface function, and

a render-contour-line-into-function processor (32B) that approximates the picture contour line by the picture contour line function.

5. The picture signal conversion system (100) according to claim 4, wherein
the render-gray-level-into-function processor (32C) is configured to approximate the picture gray level by piece-wise plane surface functions (m $\leq$ 2), piece-wise curved surface functions (m = 3) and piece-wise spherical surface functions (m = ∞), selected from the plurality of signal spaces $_mS$ by which the automatic region classification processor (32A) classified the input picture signal f(x,y).

6. The picture signal conversion system (100) according to claim 4, wherein
   the render-contour-line-into-function processor (32B) includes an automatic contour classification processor (321) configured to extract and classify piece-wise line segments, piece-wise degree-two curves and piece-wise arcs from the input picture signal f(x,y) classified by the automatic region classification processor according to the signal spaces $_mS$; and
   the render-contour-line-into-function processor (32B) is configured to approximate the piece-wise line segments, the piece-wise degree-two curves and the piece-wise arcs, classified by the render-contour-line-into-function processor (32B) according to the signal spaces $_mS$, using functions of the according signal spaces $_mS$.

7. The picture signal conversion system (100) according to any one of claims 1 to 3, wherein
   the frame rate enhancing unit (40) includes
   a corresponding point estimation processor (41) configured to estimate, for each of a plurality of pixels in a reference frame, a corresponding point in each of a plurality of picture frames differing in time;
   a first processor of gray scale value generation (42) configured to find for each of the estimated corresponding points in each picture frame a corresponding gray scale value by spatially interpolating gray scale values indicating the gray level of neighboring pixels;
   a second processor of gray scale value generation (43) configured to fit, for each of the pixels in the reference frame, a function of $_mS$ to the gray scale values of the respective estimated corresponding points in the picture frames, and to determine, from the function, gray scale values of points corresponding to the respective pixel in the reference frame in frames for interpolation that are temporally located between the reference frame and/or the picture frames; and
   a third processor of gray scale value generation (44) that generates, from the gray scale value of each corresponding point in the picture frame for interpolation, the gray scale value of neighboring pixels of each corresponding point in the frame for interpolation.

8. The picture signal conversion system (100) according to any one of claims 1 to 3, wherein
   the frame rate enhancing processor (40) is configured to perform, for the picture signal encoded for compression by the encoding processor (30), the processing of enhancing the frame rate as well as size conversion of enlarging or reducing the picture to a predetermined size, by interpolation based on the picture information and the motion information.

9. The picture signal conversion system (100) according to any one of claims 1 to 3, wherein
   the frame rate enhancing unit (110) includes
   first function approximation means (111) for inputting the picture information, encoded for compression by the encoding processor (30), and for approximating the gray scale distribution of a plurality of pixels in reference frames by a function;
   corresponding point estimation means (112) for performing correlation calculations, using a function of gray scale distribution in a plurality of the reference frames differing in time, approximated by the first function approximation means (111), to set respective positions that yield the maximum value of the correlation as the corresponding point positions in the respective reference frames;
   second function approximation means (113) for putting corresponding point positions in each reference frame as estimated by the corresponding point estimation unit (112) into the form of coordinates in terms of the horizontal and vertical distances from the point of origin of each reference frame, putting changes in the horizontal and vertical positions of the coordinate points in the reference frames, different in time, into time-series signals, and approximating the time-series signals of the reference frames by a function; and
   third function approximation means (114) for setting, for a picture frame of interpolation at an optional time point between the reference frames, a position in the picture frame for interpolation corresponding to the corresponding point positions in the reference frames, as a corresponding point position, based on the function approximated by the second function approximation means (113); wherein
   the third function approximation means (114) determines a gray scale value at the corresponding point position of the picture frame for interpolation by interpolation with gray scale values at the corresponding points of the reference frames;
   the third function approximation means (114) causes the first function approximation means (111) to fit with the gray scale value of the corresponding point of the picture frame for interpolation to find the gray scale distribution in the neighborhood of the corresponding point to convert the gray scale distribution in the neighborhood of the corresponding point into the gray scale values of the pixel points in the picture frame for interpolation.

**Patentansprüche**

1. Bildsignalumwandlungssystem (100) mit:

einem Vorprozessor (20) geeignet zum Ausführen eines Aufbereitens eines Eingangsbildsignals f(x,y), das dem Bildsignalumwandlungssystem (100) durch eine Bildeingabeeinheit (10) zugeführt wird; wobei

der Vorprozessor (20) ein Abbildungsmodell (21) aufweist, das ein Eingangsbildsignal f(x,y) durch eine Verzerrungsfunktion H(x, y) verschlechtert, und ein beobachtetes Bildsignal g(x,y) ausgibt, das durch Addieren von Rauschen n(x,y) zu dem verschlechterten Eingangsbildsignal erzeugt wird;

der Vorprozessor (20) geeignet ist, einen Unterschied zwischen dem beobachteten Bildsignal g(x,y) und dem Eingangsbildsignal f(x,y) abzuschätzen und die Verzerrungsfunktion H(x,y) basierend auf dem geschätzten Unterschied rekursiv zu optimieren, wobei H(x,y)*f(x,y) als Hf dargestellt ausgedrückt wird, durch:

Setzen von $H = A \otimes B;(A \otimes B)f = vec(BFA^T), vec(F)=f$, wobei $\otimes$ einen Kronecker-Operator bezeichnet und *vec* ein Operator ist, der eine Matrix in der Spaltenrichtung erweitert, um einen Spaltenvektor zu erzeugen;

Abschätzen der Verzerrungsfunktion H des Verzerrungsmodells durch Setzen von $H_{SVD} = U\Sigma V^T$, $A = U_A \Sigma_A V_A^T, B = U_B \Sigma_B V_B^T$ und daher von $H = (U_A \otimes U_B)(\Sigma_A \otimes \Sigma_B)(V_A \otimes V_B)^T$

Berechnen eines neuen Sollbildes $g_E$ als $g_E = (\beta C_{EP} + \gamma C_{EN})g$, wobei $\beta$ und $\gamma$ Kontrollparameter und $C_{EP}$, $C_{EN}$ jeweils Operatoren für Kantenerhalt und Kantenhervhebung sind und wobei gilt $g_{KPA} = vec(BG_E A^T)$, $vec(G_E)=g_E$

Ausführen von Minimierungsverarbeitung des neu berechneten Bildes $g_{KPA}$ durch Minimieren bezüglich f(x,y) und dadurch Erhalten von $f_k(x,y)$: $\min_f \left\{ \left\| H_k\, f - g_{KPA} \right\|^2 + \alpha \left\| Cf \right\|^2 \right\}$, wobei $\alpha$ und C Kontroll-

parameter sind;

Verifizieren ob $f_k(x,y)$ eine Testbedingung erfüllt oder nicht;

wenn die Testbedingung nicht erfüllt ist, Ausführen von Minimierungsverarbeitung bezüglich der Verzerrungsfunktion H(x,y) des Verzerrungsmodells: $\min_H \left\{ \left\| Hf_k - g_{KPA} \right\|^2 \right\}$; und

Iterieren der Minimierung von f(x,y) und H(x,y) bis $f_k(x,y)$, das durch die Minimierungsverarbeitung des neuen Bildes $g_{KPA}(x,y)$ erhalten wird, die Testbedingung erfüllt;

der Vorprozessor (20) $f_k(x,y)$ als Schätzwert des Eingangsbildsignals f(x,y) extrahiert, wenn die Testbedingung $\|H_k f_k - g_{KPA}\|^2 + \alpha \|Cf_k\|^2 < \varepsilon^2, k > c$ erfüllt wird, wobei k die Anzahl der Wiederholungen ist und $\varepsilon$, c Grenzwerte für die Entscheidung angeben;

einen Kodierungsprozessor (30), der geeignet ist,

sich entsprechende Punkte einer Mehrzahl von Bildframes als Punktentsprechungsinformation abzuschätzen, die in dem von dem Vorprozessor (20) von Rauschen befreiten Eingangsbildsignal f(x,y) enthalten sind, durch: Bestimmen von Korrelationswerten zwischen Punkten verschiedener Bildframes, Einschätzen von Punkten mit maximaler Korrelation als sich entsprechende Punkte und Bestimmen eines Koordinatenversatzwertes zwischen sich entsprechenden Punkten,

einen Bewegungsanteil des Eingangsbildsignals f(x,y) in einen Bewegungsvektor V als Bewegungsinformation des Eingangsbildsignals f(x,y) darzustellen, durch: Verwenden des Koordinatenversatzwertes zwischen sich entsprechenden Punkten und Annähern von Veränderungen der sich entsprechenden Punkte in jeder Koordinatenrichtung aufgrund von Bewegung durch Funktionen, die zwischen den Koordinatenwerten der sich entsprechenden Punkte interpolieren;

Bildframes des Eingangsbildsignals f(x,y) gemäß m für m≤2 in eine stückweise ebene Oberflächenregion, für m=3 in eine stückweise gekrümmte Oberflächenregion, für 4≤m<oo in eine irreguläre Region und für m=oo in eine stückweise sphärische Oberflächenregion zu klassifizieren;

einen Bildgraustufenlevel eines Gebiets eines Bildframes des Eingangsbildsignals f(x,y), das gemäß m klassifiziert wurde, durch Annähern des Bildgraustufenlevels durch eine Oberflächenfunktion des demgemäßen Signalraums $_mS$ als Funktion des demgemäßen Signalraums $_mS$ zu rendern, wenn eine Intensitätsverteilung des Gebiets durch ein Polynom darstellbar ist, und

eine Bildkonturlinie des Gebiets des Bildframes des Eingangsbildsignals f(x,y), das gemäß m klassifiziert wurde, durch Abschätzen der Bildkonturlinie durch eine Bildkonturlinienfunktion eines demgemäßen Signalraumes $_mS$ in eine Funktion des demgemäßen Signalraumes $_mS$ zu rendern, wenn die Bildkonturlinie durch ein Polynom ausdrückbar ist;

Bildinformationen über das Eingangsbildsignal f(x,y) durch Komprimieren von Oberflächenfunktionen und Bildkonturlinienfunktionen in eine vorgegebene Form zu kodieren;

wobei die Signalräume $_mS$ durch Polynomfunktionen gebildet werden, die stückweise vom Grad (m-1) sind und (m-2) mal differenzierbar sind; und

einen Frameratenerhöhungsprozessor (40), der geeignet ist, die Framerate des Eingangsbildsignals f(x,y) zu erhöhen, das durch den Kodierungsprozessor (30) für die Kompression kodiert wurde.

2. Bildsignalumwandlungssystem (100) gemäß Anspruch 1, wobei
der Kodierungsprozessor (30) aufweist

eine Punktentsprechungsabschätzeinheit (31A) zum Ausführen des Abschätzens der sich entsprechenden Punkte;

einen ersten Prozessor zum Rendern als Funktionen (31B) zum Ausdrücken der Bewegungsinformation in dem Bewegungsvektor;

einen zweiten Prozessor zum Rendern als Funktionen (32) zum Klassifizieren des Eingangsbildsignals f(x,y) und zum Rendern des Eingangsbildsignals f(x,y) als Bildinformation in der Form der Oberflächenfunktion und der Bildkonturlinienfunktion; und

einen Kodierungsprozessor (33) zum Angeben der Bewegungsinformation und der Bildinformation in einer voreingestellten Form zum Kodieren des Eingangsbildsignals durch Kompression.

3. Bildsignalumwandlungssystem (100) gemäß Anspruch 2, wobei
die Punktentsprechungsabschätzeinheit (31A) aufweist:

erste Teilgebietsextrahierungsmittel (311) zum Extrahieren eines Teilgebiets aus einem Bildframe;

zweite Teilgebietsextrahierungsmittel (312) zum Extrahieren eines Teilgebiets eines weiteren Bildframes, das die gleiche Form wie das Teilgebiet aufweist, das durch die ersten Teilgebietsextrahierungsmittel (311) extrahiert wurde;

Annähern-durch-Funktionenmittel (313) zum Ausdrücken der Graustufenlevel der ausgewählten Teilgebiete durch stückweise Polynome und zum Ausgeben der stückweisen Polynome;

Korrelationswertberechnungsmittel (314) zum Berechnen der Korrelationswerte der Ausgaben der Annähern-durch-Funktionenmittel; und

Versatzwertberechnungsmittel (315) zum Berechnen des Positionsversatzes der Teilgebiete, der einen Maximalwert der durch die Korrelationswertberechnungsmittel berechneten Korrelation ergibt, um die berechneten Werte als die Koordinatenversatzwerte der sich entsprechenden Punkte auszugeben.

4. Bildsignalumwandlungssystem (100) gemäß Anspruch 2, wobei der zweite Prozessor zum Rendern als Funktionen (32) aufweist

einen automatischen Gebietsklassifizierungsprozessor (32A), der das Eingangsbildsignal f(x,y) klassifiziert, und einen Verarbeitungsabschnitt zum Rendern als Funktionen, der die Bildinformation rendert und einen Prozessor zum Rendern von Graustufenlevel als Funktionen (32C) aufweist, der die Bildgraustufenlevel durch die Oberflächenfunktionen annähert, und

einen Prozessor zum Rendern von Konturlinien als Funktionen (32B), der die Bildkonturlinien durch die Bildkonturlinienfunktionen annähert.

5. Bildsignalumwandlungssystem (100) gemäß Anspruch 4, wobei
der Prozessor zum Rendern der Graustufenlevel als Funktionen (32C) geeignet ist, die Graustufenlevel durch stückweise ebene Oberflächenfunktionen (m≤2), stückweise gekrümmte Oberflächenfunktionen (m=3) und stückweise sphärische Oberflächenfunktionen (m=oo) anzunähern, die aus der Mehrzahl der Signalräume $_mS$ ausgewählt werden, gemäß denen der automatische Gebietsklassifizierungsprozessor (32A) das Eingangsbildsignal f(x,y) klassifiziert.

6. Bildsignalumwandlungssystem (100) gemäß Anspruch 4, wobei
der Prozessor zum Rendern von Konturlinien als Funktionen (32B) einen automatischen Konturenklassifikationsprozessor (321) aufweist, der geeignet ist, stückweise linienförmige Segmente, stückweise Kurven vom Grad 2 und stückweise Bögen aus dem Eingangsbildsignal f(x,y) zu extrahieren und zu klassifizieren, das durch den automatischen Gebietsklassifikationsprozessor gemäß den Signalräumen $_mS$ klassifiziert wurde; und

der Prozessor zum Rendern von Konturlinien als Funktionen (32B) geeignet ist, die stückweisen linienförmigen Segmente, die stückweisen Kurven vom Grad 2 und die stückweisen Bögen, die von den Prozessor zum Rendern von Konturlinien als Funktionen (32B) gemäß den Signalräumen $_mS$ klassifiziert wurden, mittels Funktionen der entsprechenden Signalräume $_mS$ anzunähern.

**7.** Bildsignalumwandlungssystem (100) gemäß einem der Ansprüche 1 bis 3, wobei
die Frameratenerhöhungseinheit (40) aufweist
einen Punktentsprechungsabschätzprozessor (41), der geeignet ist, für jeden einer Mehrzahl von Pixeln eines Referenzframes einen entsprechenden Punkt in jedem einer Mehrzahl von Bildframes zu unterschiedlichen Zeiten abzuschätzen;
einen ersten Prozessor zur Graustufenwerterzeugung (42), der geeignet ist, für jeden der abgeschätzten korrespondierenden Punkte in jedem Bildframe einen korrespondierenden Graustufenwert durch räumliches Interpolieren von Graustufenwerten zu finden, die die Graustufenlevel von benachbarten Pixeln angeben;
einen zweiten Prozessor zur Graustufenwerterzeugung (43), der geeignet ist, für jeden Pixel in dem Referenzframe eine Funktion aus $_mS$ an die Graustufenwerte der entsprechenden abgeschätzten korrespondierenden Punkte in den Bildframes anzupassen und aus der Funktion Graustufenwerte von Punkten zu bestimmen, die den entsprechenden Pixeln des Referenzframes in interpolierten Frames entsprechen, die zeitlich zwischen dem Referenzframe und/oder den Bildframes angeordnet sind; und
einen dritten Prozessor zur Graustufenwerterzeugung (44) der aus den Graustufenwerten jedes korrespondierenden Punktes in den interpolierten Bildframes den Graustufenwert benachbarter Pixel eines jeden korrespondierenden Punktes in dem interpolierten Frame erzeugt.

**8.** Bildsignalumwandlungssystem (100) gemäß einem der Ansprüche 1 bis 3, wobei
der Frameratenerhöhungsprozessor (40) geeignet ist, für das Bildsignal, dass durch den Kodierungsprozessor (30) für die Kompression kodiert wurde, sowohl die Frameratenerhöhungsverarbeitung als auch eine Größenumwandlung gemäß einer Vergrößerung oder Verkleinerung des Bildes auf eine vorgegebene Größe durch auf den Bildinformationen und den Bewegungsinformationen basierende Interpolation auszuführen.

**9.** Bildsignalumwandlungssystem (100) gemäß einem der Ansprüche 1 bis 3, wobei
die Frameratenerhöhungseinheit (110) aufweist
erste Funktionsnäherungsmittel (111) zum Eingeben der Bildinformation, die für die Kompression durch den Kodierungsprozessor (30) kodiert wurde, und zum Nähern der Graustufenverteilung einer Mehrzahl von Pixeln in Referenzframes durch eine Funktion;
Punktentsprechungsabschätzmittel (112) zum Ausführen einer Korrelationsberechnung unter Verwendung einer Funktion von Graustufenverteilungen in einer Mehrzahl von Referenzframes zu unterschiedlichen Zeiten, die durch die ersten Funktionsnäherungsmittel (111) genähert wurden, um entsprechende Positionen als die Positionen der sich entsprechenden Punkte in den jeweiligen Referenzframes einzustellen, die den Maximalwert der Korrelation ergeben;
zweite Funktionsnäherungsmittel (113) zum Einstellen von Positionen sich entsprechender Punkte in jedem Referenzframe, wie sie durch die Punktentsprechungsabschätzeinheit (112) abgeschätzt wurden, in die Form von Koordinaten gemäß der horizontalen und vertikalen Abstände vom Ursprung jedes Referenzframes, zum Einsetzen von Änderungen in den horizontalen und vertikalen Positionen der Koordinatenpunkte in den sich zeitlich unterscheidenden Referenzframes in Zeitreihensignale und zum Nähern der Zeitreihensignale der Referenzframes durch eine Funktion; und
dritte Funktionsnäherungsmittel (114) zum Einstellen einer Position in einem interpolierten Bildframe, das an einem optionalen Zeitpunkt zwischen den Referenzframes angeordnet ist, als eine Punktentsprechungsposition, wobei die Position der Position der sich entsprechenden Punkte in den Referenzframes entspricht, basierend auf den durch die zweiten Funktionsnäherungsmittel (113) genäherten Funktionen; wobei
die dritten Funktionsnäherungsmittel (114) einen Graustufenwert an der Punktentsprechungsposition des interpolierten Bildframes durch Interpolation der Graustufenwerte an den entsprechenden Punkten der Referenzframes bestimmen;
die dritten Funktionsnäherungsmittel (114), die ersten Funktionsnäherungsmittel (111) dazu bestimmen, mit dem Graustufenwert des entsprechenden Punktes des interpolierten Bildframes übereinzustimmen, um die Graustufenverteilung in der Umgebung des entsprechenden Punktes zu finden, um die Graustufenverteilung in der Umgebung des entsprechenden Punktes in die Graustufenwerte der Pixelpunkte in dem interpolierten Bildframe zu konvertieren.

**Revendications**

1.  Système de conversion de signal d'image (100) comprenant :

    une unité de pré-traitement (20) configurée pour effectuer le pré-traitement d'une entrée de signal d'image d'entrée f(x,y) dans le système de conversion de signal d'image (100) par une unité d'entrée d'image (10) ; dans lequel
    l'unité de pré-traitement (20) inclut un modèle d'image (21) qui détériore un signal d'image d'entrée f(x,y) grâce à une fonction de floutage H(x,y)
    et délivre un signal d'image observée g(x,y) obtenu par l'ajout d'un bruit n(x, y) au signal d'image d'entrée détérioré ;
    l'unité de pré-traitement (20) est configurée pour estimer une différence entre le signal d'image observé g(x,y) et le signal d'image d'entrée f(x,y) et pour optimiser récursivement la fonction de floutage H(x,y) en fonction de la différence estimée
    H(x,y)*f(x,y) est exprimée de manière représentative comme Hf, en définissant

    $$H = A \otimes B; (A \otimes B)f = vec(BFA^T), vec(F) = f$$

    où X indique un opérateur de Kronecker et vec est un opérateur qui étend une matrice dans la direction de la colonne afin de générer un vecteur de colonne ;
    estimant la fonction de floutage H du modèle de détérioration en définissant

    $$H_{SVD} = U\Sigma V^T, A = U_A \Sigma_A V_A^T, B = U_B \Sigma_B V_B^T$$

    et par conséquent

    $$H = (U_A \otimes U_B)(\Sigma_A \otimes \Sigma_B)(V_A \otimes V_B)^T$$

    calculant une nouvelle image cible $g_E$ comme $gE = (\beta C_{EP} + \gamma C_{EN})g$, où $\beta$ et $\gamma$ sont des paramètres de commande et C , C sont respectivement des opérateurs pour EP EN la sauvegarde de bord et l'accentuation de bord, et comme

    $$g_{KPA} = vec(BG_E A^T), vec(G_E) = g_E$$

    réalisant un traitement minimisant sur la nouvelle image calculée g en minimisant sur f(x,y), obtenant par KPA conséquent $f_k(x,y)$ : $\{||H_k f - g_{KPA}||^2 + \alpha||Cf||^2\}$, où $\alpha$ et c sont des paramètres de commande ;
    vérifiant si oui ou non $f_k(x,y)$ remplit une condition de test ;
    si la condition de test n'est pas remplie, en réalisant un traitement minimisant sur la fonction de floutage H(x, y) du modèle de détérioration :

    $$\min_H \left\{ \left\| Hf_k - g_{KPA} \right\|^2 \right\} ;$$

    en itérant la minimisation de f(x,y) et H(x,y) jusqu'à ce que $f_k(x,y)$ obtenu par le traitement de minimisation sur la nouvelle image g (x,y) remplisse la condition de test ; KPA
    l'unité de pré-traitement (20) extrait $f_k(x,y)$ en tant qu'estimation du signal d'image d'entrée f(x,y) si la condition de test $||H_k f_k - g_{KPA}||^2 + \alpha||Cf_k||^2 < \varepsilon^2, k > c$ est remplie, où k est le nombre de fois de répétition et $\varepsilon$, c indiquent des valeurs de seuil pour la décision ;
    un processeur d'encodage (30) configuré

pour estimer les points correspondants entre une pluralité d'images de trame incluses dans le signal d'image d'entrée f(x,y) libéré du bruit par l'unité de pré-traitement (20) en tant qu'information de point correspondant en déterminant des valeurs de corrélation entre les points de différentes images de trame, en estimant des points possédant les valeurs de corrélation maximales en tant que points correspondants, et en déterminant une valeur de compensation de coordonnée entre les points correspondants,

pour rendre une partie mobile du signal d'image d'entrée f(x,y) en un vecteur V de mouvement en tant qu'information de mouvement du signal d'image d'entrée f(x,y) en utilisant les valeurs de compensation de coordonnées entre les points correspondants et en rapprochant des modifications des points correspondants dans chaque direction de coordonnée en raison du mouvement par fonctions qui s'interpolent entre les valeurs de coordonnée des points correspondants ;

pour classer les images de trame du signal d'image d'entrée f(x,y) conformément à m en une région de surface plane cellule par cellule pour m ≤ 2, en une un région de surface courbe cellule par cellule pour m = 3, en une région irrégulière pour 4 ≤ m < ∞, et en une région de surface sphérique cellule par cellule pour m = ∞ ;

pour rendre un niveau de gris d'image d'une région d'une image de trame du signal d'image d'entrée f(x,y) qui a été classé conformément à m, si une distribution d'intensité de la région est exprimable par un polynôme, en une fonction des espaces d'un signal $_mS$ conforme, en rapprochant le niveau de gris d'image par une fonction de surface de l'espace de signal $_mS$ conforme, et

pour rendre une ligne de contour d'image de la région de l'image de trame du signal d'image d'entrée f(x,y) qui a été classée conformément à m, si la ligne de contour de l'image est exprimable par un polynôme, en une fonction des espaces d'un signal $_mS$ conforme, en rapprochant la ligne de contour de l'image par une fonction de ligne de contour de l'image de l'espace de signal $_mS$ conforme ;

pour encoder des informations d'image relatives au signal d'image d'entrée f(x,y) en compressant les fonctions de surface et les fonctions de ligne de contour d'image en une forme prédéterminée ; dans lequel les espaces de signal $_mS$ sont formés de fonctions de polynôme cellule par cellule en degrés (m-1) étant différentiables (m-2) fois ; et

une unité de traitement améliorant la fréquence de trame (40) configurée pour améliorer la fréquence de trame du signal d'image d'entrée f(x,y) encodée pour compression par l'unité de traitement d'encodage (30).

2. Système de conversion de signal d'image (100) selon la revendication 1, dans lequel l'unité de traitement d'encodage (30) comprend

une unité d'estimation de point correspondant (31A) pour la réalisation de l'estimation des points correspondants ;

une première unité de traitement de rendu en fonction (31B) pour exprimer les informations de mouvement en vecteur de mouvement ;

une seconde unité de traitement de rendu en fonction (32) pour classer le signal d'image d'entrée f(x,y) et pour rendre le signal d'image d'entrée f(x,y) en informations d'image sous la forme de la fonction de surface et de la fonction de ligne de contour de l'image ; et

une unité de traitement d'encodage (33) pour énoncer, sous une forme prédéfinie, les informations de mouvement, et les informations d'image pour encoder le signal d'image d'entrée par compression.

3. Système de conversion du signal d'image (100) selon la revendication 2, dans lequel l'unité d'estimation du point correspondant (31A) comprend :

un premier moyen d'extraction de région partielle (311) pour l'extraction partielle d'une région d'une image de trame ;

un second moyen d'extraction de région partielle (312) pour l'extraction d'une région partielle d'une autre image de trame possédant la même forme que la région partielle extraite par le premier moyen d'extraction de région partielle (311) ;

un moyen de rapprochement par fonction (313) pour l'expression des niveaux de gris des régions partielles sélectionnées par des polynômes cellule par cellule et pour sortir les polynômes cellule par cellule ;

un moyen de calcul de valeur de corrélation (314) pour calculer les valeurs de corrélation des sorties du moyen de rapprochement par fonction ; et

un moyen de calcul de valeur de compensation (315) pour calculer la compensation de la position des régions partielles qui donneront une valeur maximale de la corrélation calculée par le moyen de calcul de valeur de corrélation pour sortir les valeurs calculées en tant que valeurs de compensation de coordonnées des points correspondants.

4. Système de conversion de signal d'image (100) selon la revendication 2, dans lequel la seconde unité de traitement de rendu en fonction (32) inclut

une unité de traitement automatique de classement de région (32A) qui classe le signal d'image d'entrée f(x,y) ; et
une section de traitement de rendu en fonction qui rend les informations d'image, incluant une unité de traitement de rendu de niveau de gris en fonction (32C) qui rapproche le niveau de gris de l'image par la fonction de surface, et une unité de traitement de rendu de ligne de contour en fonction (32B) qui rapproche la ligne de contour de l'image par la fonction de ligne de contour d'image.

5. Système de conversion de signal d'image (100) selon la revendication 4, dans lequel
l'unité de traitement de rendu de niveau de gris en fonction (32C) est configurée pour rapprocher le niveau de gris de l'image par des fonctions de surface plane cellule par cellule (m ≤ 2), des fonctions de surface courbe cellule par cellule (m = 3) et des fonctions de surface sphérique cellule par cellule (m = ∞) sélectionnées à partir de la pluralité d'espaces de signal $_mS$ par lesquels l'unité de traitement automatique de classement de région (32A) ont classifié le signal d'image d'entrée f(x,y).

6. Système de conversion de signal d'image (100) selon la revendication 4, dans lequel
l'unité de traitement de rendu de ligne de contour en fonction (32B) inclut une unité de traitement automatique de classement de contour (321) configurée pour extraire et classer des segments de ligne cellule par cellule, des courbes de degré deux cellule par cellule et des arcs cellule par cellule à partir du signal d'image d'entrée f(x,y) classés par l'unité de traitement automatique de classement de région conformément aux espaces de signal $_mS$ ; et
l'unité de traitement de rendu de ligne de contour en fonction (32B) est configurée pour rapprocher les segments de ligne cellule par cellule, les courbes de degré deux cellule par cellule et les arcs cellule par cellule, classés par l'unité de traitement de rendu de ligne de contour en fonction (32B) conformément aux espaces de signal $_mS$, en utilisant les fonctions des espaces de signal $_mS$ conformes.

7. Système de conversion de signal d'image (100) selon l'une quelconque des revendications 1 à 3, dans lequel
l'unité de traitement améliorant la fréquence de trame (40) inclut
une unité de traitement d'estimation de point correspondant (41) configurée pour estimer, par chacun d'une pluralité de pixels dans une trame de référence, un point correspondant dans chacune d'une pluralité de trames d'image différant dans le temps ;
une première unité de traitement de génération de valeur d'échelle de gris (42) configurée pour trouver pour chacun des points correspondants estimés dans chaque trame d'image une valeur d'échelle de gris correspondante en interpolant dans l'espace les valeurs d'échelle de gris indiquant le niveau de gris des pixels voisins ;
une deuxième unité de traitement de génération de valeur d'échelle de gris (43) configurée pour cadrer, pour chacun des pixels dans la trame de référence, une fonction de $_mS$ aux valeurs d'échelle de gris des points correspondants estimés respectifs dans les trames d'image, et pour déterminer, à partir de la fonction, des valeurs d'échelle de gris des points correspondants au pixel respectif dans la trame de référence dans des trames pour l'interpolation qui sont situées temporellement entre la trame de référence et/ou les trames d'image ; et
une troisième unité de traitement de génération de valeur d'échelle de gris (44) qui génère, à partir de la valeur d'échelle de gris de chaque point correspondant dans la trame d'image pour l'interpolation, la valeur d'échelle de gris des pixels voisins de chaque point correspondant dans la trame pour l'interpolation.

8. Système de conversion de signal d'image (100) selon l'une quelconque des revendications 1 à 3, dans lequel
l'unité de traitement améliorant la fréquence de trame (40) est configurée pour réaliser, pour le signal d'image encodé pour compression par l'unité de traitement d'encodage (30), le traitement d'amélioration de la fréquence de trame ainsi que la conversion de dimension d'agrandissement ou de réduction de l'image à des dimensions prédéterminées, par interpolation fondée sur les informations d'image et les informations de mouvement.

9. Système de conversion de signal d'image (100) selon l'une quelconque des revendications 1 à 3, dans lequel
l'unité d'amélioration de la fréquence de trame (110) inclut
un premier moyen d'approximation de fonction (111) pour l'entrée d'informations d'image, encodées pour compression par l'unité de traitement d'encodage (30), et pour rapprocher la distribution d'échelle de gris d'une pluralité de pixels dans des trames de référence par une fonction ;
un moyen d'estimation de point correspondant (112) pour réaliser des calculs de corrélation, utilisant une fonction de distribution d'échelle de gris dans une pluralité des trames de référence différant dans le temps, rapprochées par le premier moyen d'approximation de fonction (111), pour définir des positions respectives qui produisent la valeur maximale de la corrélation en tant que positions de point correspondant dans les trames de référence respectives ;
un deuxième moyen d'approximation de fonction (113) pour mettre les positions de point de référence dans chaque trame correspondante tel qu'estimé par l'unité d'estimation de point correspondant (112) sous la forme de coordonnées en termes de distances horizontale et verticale à partir du point d'origine de chaque trame de référence, mettant les modifications dans les positions horizontale et verticale des points de coordonnées dans les trames de référence, différentes dans le temps, en signaux de séries temporelles, et rapprochant les signaux de séries temporelles des trames de référence par une fonction ; et

un troisième moyen d'approximation de fonction (114) pour la définition, pour une trame d'image d'interpolation à un point temporel optionnel entre les trames de référence, d'une position dans la trame d'image pour interpolation correspondant aux positions de point correspondant dans les trames de référence, en tant que position de point correspondant, fondée sur la fonction rapprochée par le deuxième moyen d'approximation de fonction (113) ; dans lequel

le troisième moyen d'approximation de fonction (114) détermine une valeur d'échelle de gris à la position de point correspondant de la trame d'image pour l'interpolation en interpolant avec les valeurs d'échelle de gris aux points correspondants des trames de référence ;

le troisième moyen d'approximation de fonction (114) implique que le premier moyen d'approximation de fonction (111) cadre avec la valeur d'échelle de gris du point correspondant de la trame d'image pour l'interpolation pour trouver la distribution d'échelle de gris à proximité du point correspondant pour convertir la distribution d'échelle de gris à proximité du point correspondant en valeurs d'échelle de gris des points de pixel dans la trame d'image pour l'interpolation.

FIG.1

2 1

| true input picture (unknown) f(x, y) | → | deterioration model;<br>blurred picture(PSF)<br>H(x,y) | $\widetilde{f}(x, y)$ → ⊕ → | observed picture g(x, y) |

noise n(x, y)

## FIG.2

2 2

| observed picture g(x, y) | → | reverse filter | → | estimated picture $\widetilde{f}(x, y)$ |

## FIG.3

**FIG.4**

FIG.5

**FIG.6**

**FIG.7**

FIG.8A

Frame(k)

FIG.8B

Frame(k+1)

FIG.8C

maximum value Pk

$r(\tau_1, \tau_2)$

FIG.8D

Frame(k)

tetra-tupled enlargement by 2-frame corresponding point estimation and non-uniform interpolation

estimated corresponding point (partial)

object motion (rotation)

frame 2 (F2)

frame 1 (F1)

(A)

(B 1)

(B 2)

(C 1) conventional method (quadratic polynomial interpolation)

(C 2) proposed (correlation function method)

FIG.9

FIG.10

**FIG.11A**

frame 1  frame 2  frame 3  frame 4  frame 5

**FIG.11B**

maximum point

X-coordinate

0

1  2  3  4  5          10                    20

reference frame number $N_{REF}$

**FIG.11C**

maximum point

Y-coordinate

0

1  2  3  4  5          10                    20

reference frame number $N_{REF}$

**FIG.12**

FIG.13A

FIG.13B

# FIG.14

| position | number of bytes | data | meaning |
|---|---|---|---|
| fff[0] | 4 | 808470086 | header "FF00" |
| fff[1] | 4 | 400 | picture width |
| fff[2] | 4 | 347 | picture height |
| fff[3] | 1 | 1 | object sort and contour (PATH) |
| fff[4] | 1 | 19=BIN[0010011] | segment sort: 1= start point, coordinate precision: 1 = 8 bits, coordinate: 1 –absolute coordinate |
| fff[5] | 1 | 2 | x–coordinate of start point |
| fff[6] | 1 | 3 | y–coordinate of start point |
| fff[7] | 1 | 55=BIN[0110111] | segment sort: 3= arc, coordinate precision: 3=16 bit, coordinate: 1 –absolute coordinate |
| fff[8] | 2 | 200 | x–coordinate of median point |
| fff[9] | 2 | 348 | y–coordinate of median point |
| fff[10] | 2 | 399 | x–coordinate of end point |
| fff[11] | 2 | 692 | y–coordinate of end point |
| fff[12] | 1 | 39=BIN[0100111] | segment sort: 2 = line segment, coordinate precision: 3=16 bit, coordinate: 1 –absolute coordinate |
| fff[13] | 2 | 400 | x–coordinate of start point |
| fff[14] | 2 | 692 | y–coordinate of start point |
| fff[15] | 1 | 55=BIN[0110111] | segment sort: 3= arc, coordinate precision: 3 =16 bit, coordinate: 1 –absolute coordinate |
| fff[16] | 2 | 600 | x–coordinate of median point |
| fff[17] | 2 | 348 | y–coordinate of median point |
| fff[18] | 2 | 798 | x–coordinate of end point |
| fff[19] | 2 | 2 | y–coordinate of end poin |
| fff[20] | 1 | 35=BIN[0100011] | segment sort: 3 = line segment, coordinate precision: 1 = 8 bit, coordinate: 1 –absolute coordinate |
| fff[21] | 1 | 3 | x–coordinate of start point |
| fff[22] | 1 | 2 | y–coordinate of start point |
| fff[23] | 1 | 35=BIN[0100011] | segment sort: 2 = line segment, coordinate precision: 1 = 8 bits, coordinate: 1 –absolute coordinate |
| fff[24] | 1 | 2 | x–coordinate of end point |
| fff[25] | 1 | 3 | y–coordinate of end point |
| fff[26] | 1 | 0 | segment sort: 0 = end |
| fff[27] | 1 | 2 | object sort: region (REGION) |
| fff[28] | 1 | 0 | Blue |
| fff[29] | 1 | 0 | Green |
| fff[30] | 1 | 0 | Red |
| fff[31] | 1 | 2=BIN[0010] | number of D bits: 1 = 8 bits |
| fff[32] | 1 | 1 | pathid |
| fff[33] | 1 | 0 | region end |
| fff[34] | 1 | 0 | object end |

EP 2 330 817 B1

| number of times of frame division | number of regions in frame | number of corresponding regions | center x-coordinate of corresponding region of previous I or G | center y-coordinate of corresponding region of previous I or G | center x-coordinate of corresponding region of rear I or G | center y-coordinate of corresponding region of rear I or G |
|---|---|---|---|---|---|---|
| 3 | 4 | 1 | 100 | 150 | 130 | 120 |
| | | 2 | 500 | 160 | 450 | 160 |
| | | 3 | 850 | 320 | 950 | 280 |
| | | 4 | 1100 | 460 | 1020 | 500 |

FIG.15

EP 2 330 817 B1

Q₁  D₁₁ D₁₂ D₁₃ Q₂  D₂₁ D₂₂ D₂₃ Q₃  D₃₁ D₃₂ D₃₃ Q₄

frame number

## FIG.16A

Q₁  D₁₁ D₁₂ D₁₃ Q₂  D₂₁ D₂₂ D₂₃ Q₃  D₃₁ D₃₂ D₃₃ Q₄

frame number

## FIG.16B

FIG.17

FIG.18

FIG.19A

low frame rate moving picture

FIG.19B

$F_0$    $F_I$

high frame rate moving picture

original frame

interpolated frame

```
        ┌───────────┐
        (   Start   )
        └─────┬─────┘
              │
              ▼
   ┌─────────────────────┐
   │  corresponding point │ ~ S11
   │  estimation processing│
   └──────────┬──────────┘
              │
              ▼
   ┌─────────────────────┐
   │  first gray scale value│ ~ S12
   │  generation processing │
   └──────────┬──────────┘
              │
              ▼
   ┌─────────────────────┐
   │  second gray scale value│ ~ S13
   │  generation processing │
   └──────────┬──────────┘
              │
              ▼
   ┌─────────────────────┐
   │  third gray scale value│ ~ S14
   │  generation processing │
   └──────────┬──────────┘
              │
              ▼
        ┌───────────┐
        (   End     )
        └───────────┘
```

# FIG.20

**FIG.21A**

reference frame F(k)

F(k+1)

corresponding point Pn(k+1)

Pn(k)

motion vector MV

t

t=k

t=k+1

**FIG.21B**

corresponding point Pn

**FIG.21C**

Pn(k)

Pn(k+1/2)

Pn(k+1)

t

t=k    t=k+1/2    t=k+1

F(k+1/2)

reference frame F(k)

Pn(k+1/2)

F(k+1/2)

Pn(k+1)

F(k+1)

Pn(k)

t

t=k        t=k+1/2        t=k+1

**FIG.21D**

F(k+1/2)

non−uniform interpolation

(A) first frame(F₁)

(B) second frame(F₂)

(C)

FIG.22

FIG.23

EP 2 330 817 B1

uniform interpolation function

# FIG.24A

non-uniform interpolation function

# FIG.24B

enlarged pixel line of frame 1 ($L_{F1}$)

enlarged pixel line of frame 2 ($L_{F2}$)

X  intrapolated pixel value of frame 1 ($F_1$)
△  intrapolated pixel value of frame 2 ($F_2$)
○  interpolated pixel of frame 1 ($F_1$) desired to be found

FIG.25

FIG.26

FIG.27

FIG.28

**FIG.29A**

frame picture f

p

q

x

y

**FIG.29B**

frame picture g

p

q

$\tau_x$

$\tau_y$

x

y

```
┌─────────────────────────────────────────────────────┐
│           input pictures of frames 1 and 2           │ ⌐∿ step A
└─────────────────────────────────────────────────────┘
                          ↓
┌─────────────────────────────────────────────────────┐
│     calculate offset values ( τ x,  τ y) of frames 1, 2   │ ⌐∿ step B
└─────────────────────────────────────────────────────┘
                          ↓
┌─────────────────────────────────────────────────────┐
│  Enlarge pixel of frame 1 in horizontal or vertical direction;  │ ⌐∿ step C
│  calculate intrapolated pixel value by uniform interpolation    │
└─────────────────────────────────────────────────────┘
                          ↓
┌─────────────────────────────────────────────────────┐
│  Enlarge picture of frame 2 in horizontal or vertical direction;  │ ⌐∿ step D
│  calculate intrapolated pixel value by uniform interpolation      │
└─────────────────────────────────────────────────────┘
                          ↓
┌─────────────────────────────────────────────────────┐
│  calculate pixel values at pixel positions obtained after shifting  │ ⌐∿ step E
│  enlarged picture of frame 2 by offset value relative to frame 1    │
└─────────────────────────────────────────────────────┘
                          ↓
┌─────────────────────────────────────────────────────┐
│      do enlarging calculations by non-uniform interpolation      │ ⌐∿ step F
│  in the vertical or horizontal direction of pixel values at desired  │
│       positions in frame 1 from two intrapolated pixel values        │
│  of frame 1 and two pixel values at shifted positions in frame 2,    │
│                    totaling at four pixel values                     │
└─────────────────────────────────────────────────────┘
                          ↓
┌─────────────────────────────────────────────────────┐
│         output result of interpolation calculations of         │ ⌐∿ step G
│                  frame 1 as enlarged picture                   │
└─────────────────────────────────────────────────────┘
```

# FIG.30

FIG.31

FIG.32

FIG.33

FIG.34

EP 2 330 817 B1

FIG.35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI11353472 B
- JP 2000308021 A
- JP 2008004984 A
- JP HEI9163216 B
- JP 2007134886 A
- JP HEI884274 B
- US 6466624 B1

### Non-patent literature cited in the description

- Compressed Sensing Image Reconstruction Via Recursive Spatially Adaptive Filtering. **KAREN EGIA-ZARIAN et al.** IEEE INTERNATIONAL CONFERENCE ON IMAGE PROCESSING. IEEE, 01 September 2007, I-549-I-552
- Motion compensation for video compression using control grid interpolation. **SULLIVAN G J et al.** SPEECH PROCESSING 1. TORONTO, MAY 14 - 17, 1991; [INTERNATIONAL CONFERENCE ON ACOUSTICS, SPEECH & SIGNAL PROCESSING. ICASSP. IEEE, 14 April 1991, 2713-2716
- REGION-BASED VIDEO CODING USING MATHEMATICAL MORPHOLOGY. **SALEMBIER P et al.** PROCEEDINGS OF THE IEEE. IEEE, 01 June 1995, vol. 83, 843-857
- MOTION COMPENSATED IMAGE INTERPOLATION. **CAFFORIO C et al.** IEEE TRANSACTIONS ON COMMUNICATIONS. IEEE SERVICE CENTER, 01 February 1990, vol. 38, 215-222
- Frame-rate up-conversion using transmitted true motion vectors. **YEN-KUANG CHEN et al.** MULTIMEDIA SIGNAL PROCESSING, 1998 IEEE SECOND WORKSHOP ON REDONDO BEACH, CA, USA 7-9 DEC. 1998. IEEE, 07 December 1998, 622-627